# EUROPEAN PATENT SPECIFICATION

(11) **EP 1 616 088 B1**
(45) Date of publication and mention of the grant of the patent: **23.08.2006**
(21) Application number: 04727803.1
(22) Date of filing: 16.04.2004
(51) Int. Cl.: F02B 43/00, F02D 19/02, F02M 21/02, F02B 23/06

(54) **INTERNAL COMBUSTION ENGINE WITH INJECTION OF GASEOUS FUEL**
BRENNKRAFTMASCHINE MIT GASEINSPRITZUNG
MOTEUR A COMBUSTION INTERNE A INJECTION DE COMBUSTIBLE GAZEUX

(30) Priority: 16.04.2003 US 414850
(43) Date of publication of application: 18.01.2006
(73) Proprietor: Westport Research Inc., Vancouver, British Columbia V6P 6G2 (CA)
(72) Inventor: HILGER, Ulrich, 45279 Essen (DE); BARTUNEK, Bernd, 40789 Monheim (DE); OVERSBY, Kevin, Kwame, Vancouver, British Columbia V5X 1T2 (CA); LOCKLEY, Ian, Hayden, Vancouver, British Columbia V6R 2B5 (CA); CRAWFORD, John, Gordon, Etobicoke, Ontario M9A 5C6 (CA); MANN, Kenneth, R., C., Vancouver, British Columbia V6R 2B6 (CA); WING, Richard, Vancouver, British Columbia V6N 3B7 (CA)
(74) Representative: Gesthuysen, von Rohr & Eggert
(86) International application number: PCT/CA2004/000573
(87) International publication number: WO 2004/092556

(56) References cited:
- EP-A- 0 667 448
- WO-A-02/33236
- US-A- 4 462 354
- US-A- 4 721 081
- US-A- 5 329 908
- US-A- 5 676 100

## Description

### Technical Field

The invention relates to an apparatus and method for operating a gaseous-fueled internal combustion engine that comprises a fuel injection nozzle with a nozzle disposed in a combustion chamber for injecting gaseous fuel directly into the combustion chamber. An ignition device, also disposed within the combustion chamber, is installed in close proximity to the fuel injection nozzle. The ignition device comprises a sleeve that provides a shielded space around a hot surface igniter.

### Background

Liquid-fueled internal combustion engines have been used to produce power and drive machines for over a century. From the beginning, internal combustion engines have undergone many improvements to become more efficient, more powerful, and/or less polluting. To assist with these improvements, fuel properties and quality have also improved, and alternative fuels such as methanol and other alcohol-based fuels have also been considered to help with reducing harmful emissions. However, compared to such liquid fuels, an equivalent amount of a combustible gaseous fuel, such as methane, hydrogen, natural gas, and blends of such fuels, with equivalence measured on an energy basis, can be combusted to produce the same power while producing less harmful emissions in the form of particulates and greenhouse gases.

However, a problem with replacing liquid fuel with such gaseous fuels in a conventional internal combustion engine has been that such gaseous fuels typically do not ignite as readily as liquid fuels. There are also many other differences that result when a gaseous fuel is substituted for a liquid fuel. For example, the combustion strategy may be different to account for longer ignition delays associated with a gaseous fuel, or a longer time may be required to inject a gaseous fuel into the engine. In addition, the fuel supply system and the manner of introducing the fuel into the engine typically require equipment specialized for handling gaseous fuels. Furthermore, the selected combustion strategy may dictate a different geometry for the combustion chamber. Accordingly, a design suitable for a liquid-fueled engine may not be suitable for a gaseous-fueled engine without considerable modifications, which can influence commercial viability.

Gaseous-fueled engines currently used in commercial vehicles operate using the Otto cycle with homogeneous mixture formation, spark ignition, and throttle control, and these engines are predominantly derived from modified diesel-cycle engines, because of the power and torque required for commercial vehicles. For example, the mixture forming process, modified from that of diesel-cycle engines, as well as the use of spark ignition, are aspects that require respective modifications of the intake system and the cylinder head. The modified combustion process also necessitates a modified combustion chamber recess in the piston. Engine manufacturers usually make efforts to keep the number of engine components that need to be modified for gaseous fuel operation as low as possible. This is an attempt to limit the additional manufacturing costs for adapting engines to use gaseous fuel, if possible, while maintaining the durability and long service life that operators of conventionally-fueled engines have become accustomed to for their commercial vehicles.

For gaseous-fueled internal combustion engines, one of the predominant combustion processes operates with stoichiometric fuel-air mixtures in combination with a three-way catalytic converter. Initially demand for gaseous-fueled engines in commercial vehicles was based on the desire for low-emission characteristics, with efficiency and fuel consumption characteristics being secondary considerations. The admixture of gaseous fuel typically takes place through a gaseous fuel mixer, arranged in the center of the intake system, with electronically controlled gaseous fuel supply. More recent gaseous fuel systems have switched to multipoint injection in front of the intake valve of each cylinder, to improve equal distribution of the fuel and to maintain a stoichiometric mixture composition during non-stationary engine operation. In order to maintain the stoichiometric (λ = 1) fuel-air mixture, a 'closed-loop' air/fuel ratio control known from gasoline engines can be employed. The compression ratio is generally limited to values between 11:1 and 11.5:1 to ensure a sufficient safety margin against knocking.

The performance that can be achieved by non-supercharged engines with stoichiometric control is at least 5% below that of naturally aspirated liquid-fueled diesel-cycle engines, caused by the decreased air volume drawn in by the engine, which results from the addition of the gaseous fuel into the intake pipe. Compared to today's supercharged liquid-fueled diesel-cycle engines, gaseous-fueled Otto cycle engines produce up to 15% less power, taking into account the effect of the higher thermal loads associated with Otto cycle engines. This loss in power already takes into account that the use of exhaust gas recirculation with EGR rates of up to 15% can reduce the thermal load. The only way to completely compensate for the lower performance of Otto cycle engines is to increase the displacement.

The fuel economy of stoichiometrically-controlled gaseous fuel engines is characterized by an energy consumption that is 15 to 20% higher in stationary 13 mode tests than that of comparable diesel engines. When operating frequently under low load, as is typical for buses operating in cities, the throttle control has been found to be responsible for an increase in fuel consumption of above 40%.

The disadvantages with respect to power and fuel economy of stoichiometrically-controlled gaseous-fueled engines, in comparison to today's liquid-fueled diesel cycle engines, can be significantly reduced by employing lean-mix engine concepts. Mixture formation usually takes place downstream of the turbo charger in an electronically controlled fuel-air mixer centrally located in the intake system. For compression ratios between 11:1 and 11.5:1, the lean-mix engine as a rule possesses a combustion chamber geometry similar to those of stoichiometrically-controlled engines. Since leaner natural gas fuel-air mixtures lead to a strongly decreasing rate of combustion, a suitable adjustment of, for example, the squish flow is necessary to counteract a prolonged combustion process with accordingly higher hydrocarbon emissions. Air ratios achievable by today's lean-mix engines are not higher than λ = 1.5 for high engine loads and thus higher rates of combustion. At low engine loads, the combustion temperature is lower and the ability to operate on a lean mixture is thus limited to λ values between 1.1 and 1.3.

Since thermal stresses on components of lean-mix engines are lower than those in stoichiometrically-controlled gaseous fuel engines, it becomes possible to significantly increase the boost pressure, so that in combination with charge-air cooling one can achieve effective average pressures of up to 14 bar. The torque band to a large extent corresponds to that of a large number of commercially available liquid-fueled diesel-cycle engines. However, lean-mix engines still may suffer from significant power disadvantages in comparison to the power levels achieved by Euro 3 type liquid-fueled diesel cycle engines.

Since the ability to operate today's lean-mix engines on even leaner mixes is limited, especially in the lower partial load range, to λ values of 1.2 to 1.4, due to the slow rate of combustion of natural gas, these engines also require throttle control. Accordingly, the ECE R49 emission test determines fuel consumption rates that are, depending on the engine design, more than 15% higher than those of comparable liquid-fueled diesel cycle engines. For example, during everyday operation of a city bus, this results in fuel consumption values that are up to 30% higher because of the large proportion of operating time when the engine operates under idle or low load conditions.

Lean-mix concepts for natural gas engines aimed at meeting the new Euro 4 emission standards coming into effect in 2005 will be characterized by further developments of existing lean-mix engine concepts aimed at a broadening of the limits of lean-mix operation to be able to reduce NOx emission values below the limit of 3.5 g/kWh.

For this purpose, combustion processes are being developed that are characterized by a more intensive cylinder charging movement; to compensate for the strongly decreasing rate of combustion of very lean mixtures with a relative air/fuel ratio of up to 1.6 at operating points close to full load. Lean-mix engines of this type possess combustion processes with increased ability to run on lean mixtures and also are equipped with exhaust turbo-charging and charge-air cooling. Depending on the design, the compression ratio lies between 11.7:1 and 13:1. Such designs should be able to achieve NOx values in the ECE R49 emission test of between 1.5 g/kWh and 2 g/kWh, given hydrocarbon values upstream of the catalytic converter of approximately 2.9 g/kWh.

Due to the higher compression ratio and the lean mixture under full load, the maximum engine efficiency can be increased up to a value of 40%. Consequently, in an ECE R49 test cycle, the fuel consumption values should only be 5% to 15% higher than those of future liquid-fueled diesel cycle engine designs for the Euro 4 emission standard. Depending on the design of the turbo charger, the achievable mean pressure may reach a maximum effective mean pressure of 14 bar to 18 bar.

In addition to developments in the area of homogeneous lean-mixture processes, recent efforts have been directed to processes with high-pressure gaseous fuel injection directly into the combustion chamber of an unthrottled engine. Such engines can employ a compression ratio similar to those employed in liquid-fueled diesel cycle engines because knocking is not a problem. For example with this type of engine, a compression ratio of between 16:1 and 18:1 can be employed. An advantage of this approach is that the low emission levels achievable with a gaseous-fueled engine can be combined with the significantly higher efficiency levels normally only associated with liquid-fueled diesel-cycle engines.

U.S. Patent No. 5,329,908 discloses a compressed natural gas injection system for gaseous-fueled engines. The fuel injection nozzle is operated so that during the injection process the gaseous fuel spreads as a cloud into the combustion chamber recess through an annular discharge opening being formed during the injection process. During this process, part of the cloud comes into contact with an ignition plug and the fuel-air mixture within the combustion chamber is ignited at the ignition plug. One of the described embodiments uses a constant pressure gas supply and a conventional glow plug serves as the ignition plug. A fuel supply unit is described for ensuring that the gaseous fuel can be supplied to the fuel injection valves with a pressure that is high enough to introduce the fuel into the combustion chamber when the piston is near top dead center. This engine operates in a high efficiency mode that achieves efficiencies like those of a liquid-fueled diesel-cycle engine. However, conventional glow plugs like those used in diesel engines are designed to provide ignition assistance only during start-up because diesel fuel readily auto-ignites at the pressures and temperatures normally present in a diesel engine once it is running. With gaseous fuels like natural gas, which do not auto-ignite as readily as diesel, with the disclosed arrangement an ignition plug may be needed to continuously provide ignition assistance to initiate combustion. Continuous activation of a conventional glow plug, which is only designed for brief use during start up, can lead to early failure. Experiments have shown that the length of a glow plug's service life generally decreases as operating temperature increases, and that conventional glow plugs can not be relied upon to provide the durability that operators of gaseous-fueled internal combustion engines are expected to demand.

U.S. Patent No. 4,721,081 is directed towards a glow plug shield with thermal barrier coating and ignition catalyst, which purports to extend the service life of a glow plug that is used to ignite fuels that are not auto-ignitable. In the background discussion provided by the '081 patent, it is noted that it is known to provide protective tubular shields of metal or ceramic circumferentially surrounding a glow plug along its length. Further, that it is also known to protect a silicon nitride glow plug by coating the plug with a refractory metal oxide and to provide the glow plug with a combustion promoting catalyst so that the glow plug temperature may be reduced. The improvements added by the'081 patent includes a shield that has an oblique open end that exposes the glow plug in the direction of the fuel injector, while providing a solid physical barrier in the direction of the intake valves. The '081 patent further discloses coating the interior and exterior of the shield with a ceramic refractory material, such as a metal oxide that acts as a thermal barrier so that the shield reduces the cooling effect of the inlet gas on the glow plug and also reduces the electrical power needed by the glow plug to maintain a surface temperature suitable for sustaining good combustion. According to the '081 patent, to further reduce the required glow plug temperature and extend glow plug life, a combustion catalyst may be incorporated into the coating.

Furthermore WO 02/33236 shows an internal combustion engine with a gas injection valve and an igniter arranged in a sleeve with intake and discharge openings according to the preamble of claim 1.

There is a need for a gaseous-fueled internal combustion engine that can match the performance, efficiency, reliability, and durability of an equivalent liquid-fueled diesel-cycle engine, while producing lower amounts of harmful emissions such as particulate matter and nitrogen oxides. Such an engine can play a major role in the improvement of air quality, especially in highly populated areas where presently there is concentrated use of liquid-fueled diesel-cycles engines and where gaseous fuels such as natural gas can be easily distributed.

### Summary

A method and apparatus are provided for injecting gaseous fuel into the combustion chamber of an unthrottled high compression engine. For example, in an engine with a compression ratio of between 16:1 and 18:1, the gaseous fuel can be injected at a high pressure of between 200 and 300 bar, towards the end of the compression stroke. This results in the formation of an inhomogeneous fuel-air mixture, similar to that found in a diesel engine. A high-speed gaseous fuel injection valve is employed to inject the gaseous fuel into the combustion chamber. The combustion chamber is defined by a cylinder, a piston that is reciprocable within the cylinder, and a cylinder head covering one end of the cylinder. The combustion chamber can be further defined in part by a piston bowl or recess formed in the piston head (which is the end surface of the piston that faces the combustion chamber). Using the present method and operating with a compression ratio substantially the same as that of an equivalent diesel engine, it is possible to reduce the modifications required for natural gas operation and to reduce manufacturing costs, by shaping the combustion chamber so that it corresponds largely to the geometry of combustion chambers found in conventional diesel engines.

Due to the insufficient ability of gaseous fuels such as natural gas to reliably self-ignite in an internal combustion engine, ignition of the fuel-air mixture is ensured by a method comprising:
introducing a gaseous fuel into the combustion chamber by means of a plurality of fuel sprays released into the combustion chamber from a fuel injection valve disposed within the combustion chamber;
directing one of the fuel sprays, referred to as an ignition spray to an impingement point on a surface of a sleeve that surrounds an igniter so that when the ignition spray exits its respective fuel injection port a substantial portion of the gaseous fuel flows towards the impingement point, whereby some of the gaseous fuel from the ignition fuel spray flows through an intake opening provided in the sleeve and mixes with air in a shielded space provided between a hot surface of a heatable member of the igniter and the sleeve to form a combustible fuel-air mixture next to the igniter, wherein the heatable member has a tip located within 3 millimeters of the centerline of the intake opening;
igniting the combustible fuel-air mixture by heating a surface of the igniter to a temperature that causes ignition of the combustible fuel-air mixture; and
restricting fluid flow between the combustion chamber and the shielded space and retaining a substantial portion of the combustible fuel-air mixture within the shielded space until combustion of same increases pressure within the shielded space to a magnitude that propels a burning fuel-air mixture therefrom, through at least one discharge opening and into contact with the plurality of fuel sprays in a region of the combustion chamber that surrounds the fuel injection valve.

Because the method results in a burning fuel-air mixture that is propelled across the combustion chamber that ignites the fuel therein, there is no need to control lambda to ensure substantially complete combustion because the problem of flame quenching in lean pockets is eliminated. Unlike earlier gaseous-fuelled engines that throttled the intake air, with this method a gaseous-fuelled engine can operate in the same manner as a conventional liquid-fuelled diesel engine with no throttling. Accordingly, with the present method, the engine is operable with a lambda between 1.4 (at high load conditions) and 6 (at idle).

In the preferred method the ignition fuel spray is oriented in a spray direction that is between less than or equal to 25 degrees from an axis perpendicular to a plane that is tangential to the sleeve at the impingement point, and more preferably the spray direction of the ignition spray is substantially perpendicular to the plane that is tangential to the surface of the sleeve at the impingement point.

A preferred embodiment of the method further comprises injecting the gaseous fuel into the combustion chamber at a first mass flow rate when the engine is operating at low load or idle, and injecting the gaseous fuel into the combustion chamber at a second mass flow rate when the engine is operating at high load, wherein the second mass flow rate is higher than the first mass flow rate.

To further improve combustion stability and engine efficiency, the method can further comprise controlling the mass flow rate so that for expected operating conditions the desired fuel quantity of the gaseous fuel can be injected into the combustion chamber by an injection event that has a duration that is longer than an ignition delay associated with the ignition of the gaseous fuel that was directed towards the igniter at the beginning of the injection event. In this way, the duration of an injection event is controllable so that a combustible fuel-air mixture is provided near the fuel injection valve where it can be ignited by the burning fuel-air mixture propelled from the shielded space, even during low load and idle conditions. Injection timing and injection event duration are preferably controlled as a function of measured engine operating conditions and by referring to an electronic engine map.

The method can further comprise controlling the fuel injection valve to control the mass flow rate of the gaseous fuel that is introduced during an injection event. This method comprises:
referring to the electronic engine map and determining a total amount of the gaseous fuel that will be introduced during an injection event for a detected engine load;
during a first stage of the injection event, selecting a first mass flow rate that will cause the combustible mixture to form within the shielded space; and
during a second stage of the injection event, selecting a second mass flow rate that will augment the gaseous fuel introduced during the first stage to provide the total amount of gaseous fuel during the injection event.

In a preferred embodiment the duration of the first stage begins at about 2 milliseconds before the second stage. The first stage can begin further ahead of the second stage if the engine is operated with a longer ignition delay, for example, during certain predetermined operating conditions such as start up when the combustion chamber is colder than normal operating temperature, or if the temperature of the igniter is set to be a lower temperature.

The second stage can begin at between about 34 and 5 crank angle degrees before top dead center during a compression stroke. Factors such as the desired total quantity of fuel to be injected or controlling combustion temperature can determine the timing for beginning the second stage.

In the preferred method the gaseous fuel that is introduced during the second stage is ignited during the second stage. That is ignition of the second stage occurs before the second stage is completed.

Another preferred method comprises introducing the gaseous fuel into the combustion chamber in a plurality of injection events during a single engine cycle. For example, a first injection event can be employed to introduce a first quantity of the gaseous fuel into the combustion chamber to be ignited by the igniter, followed by at least one other injection event to introduce a second quantity of the gaseous fuel. The first and second quantities of fuel together provide a total quantity of fuel that is equal to a desired amount determined by an engine controller, with reference to an engine map. The first quantity of fuel can be determined by the engine controller to be a quantity that is sufficient to ensure that the second quantity of fuel is ignited. The timing for the first injection event is preferably governed by the desired ignition timing and the timing for the second injection event can be governed by the timing that will result in the desired combustion characteristics.

In an example of this method, an ignition quantity of fuel that represents 5% to 10% of the fuel quantity needed at full load is introduced into the combustion chamber by the first injection event. The second injection event is employed to inject a main quantity of fuel into the combustion chamber to supplement the ignition quantity of fuel to provide the amount of fuel required to satisfy the demanded engine load, as determined by the engine controller by referring to an engine map. In this example, the two separate fuel injection events can be timed to provide more intensive and thus more stable ignition of the fuel-air mixture without an increase in the surface temperature of the igniter, a prerequisite for lower emissions of carbon monoxide and unburned fuel. In addition, because some of the fuel is introduced during the first injection event, this results in a smaller ignitable mixture volume when combustion begins, which leads to a lower heat release rate and thus less combustion noise.

When two injection events are used for one combustion cycle, engine tests have shown that good results can be achieved when the first injection event has a duration of between about 0.2 and 0.5 milliseconds. The second injection event can begin at between about 34 and 5 degrees before top dead center during a compression stroke. The second injection event preferably starts less than or equal to 1 millisecond and more than 0.2 millisecond after the end of the first injection event so that combustion of the fuel introduced by the first injection event can ignite the fuel introduced by the second injection event.

This method can further comprise dividing the main injection quantity into a plurality of individual injection events with the number of injection events limited only by the actuation capabilities of the fuel injection valve. With this approach one can control the spatial and time distribution of the fuel-air mixture in the combustion chamber, which can be especially advantageous for the overall combustion process as well as the surface ignition process. Preferably, and especially at the beginning of the combustion event, the burning fuel-air mixture emerging from the ignition device is propelled rapidly into the combustion chamber. During the later course of the fuel injection process, an increase of the injected fuel volume and mass, under stable combustion conditions, makes it possible to achieve a shortening of the total combustion time, which is advantageous for obtaining a high thermal efficiency.

This aspect of the method, which relates to employing a plurality of injection events, can be combined with controlling mass flow rate and injection event duration for additional control over the combustion process.

In preferred embodiments, the igniter is electrically heated to have a surface temperature that is hot enough to ignite the combustible fuel-air mixture that forms next to the hot surface of the igniter's heatable member. Another feature that can be incorporated into the present method comprises controlling the electrical heating energy delivered to the igniter depending upon the engine's operating conditions. That is, the method can further comprise controlling the temperature of the igniter as a function of a measured operating parameter of the engine. For example, when high load conditions are detected, the higher combustion chamber temperatures can provide heat to the igniter and reduce the requirements for electrical heating energy. Reducing the electrical heating energy that is delivered to the igniter under such conditions can result in a significant increase in the service life of the igniter.

On the other hand, at low engine load, with the associated lower combustion chamber temperature, and at high engine speeds and low engine load, the igniter is subject to a greater heat loss, which can be compensated for by increasing the electrical power to the igniter. If such conditions are not compensated for, misfire or longer ignition delays can result, causing among other things, lower efficiency and higher emissions of unburned fuel.

A combustion catalyst coating can also be disposed on at least a portion of the igniter and/or sleeve so that the igniter temperature can be reduced to increase service life and reduce power required to heat the igniter. The catalytic coating can be disposed on the sleeve or on the igniter itself.

For practicing the disclosed method an internal combustion engine that can be fueled with a combustible gaseous fuel is disclosed herein. This internal combustion engine comprises:
at least one combustion chamber defined by a cylinder, a piston reciprocable within the cylinder, and a cylinder head that covers an end of the cylinder;
an ignition device with an end disposed within the combustion chamber, the ignition device comprising an igniter that comprises a heatable member to provide a hot surface and a sleeve surrounding the igniter, the sleeve defining a shielded space between the igniter and the sleeve, wherein the heatable member extends into the shielded space from a holder mounted in the cylinder head;
a fuel injection valve disposed within the combustion chamber, the fuel injection valve being operable to introduce the combustible gaseous fuel into the combustion chamber with a plurality of fuel sprays each released from one of a plurality of fuel injection ports, wherein at least one of the plurality of fuel injection ports is oriented to direct a fuel spray, referred to as an ignition fuel spray, towards an impingement point on a surface of the sleeve;
at least one intake opening provided through the sleeve near the impingement point connecting the shielded space to the combustion chamber whereby, when the ignition fuel spray impacts the impingement point, a portion of the combustible gaseous fuel contained within the ignition fuel spray passes through the intake opening and into the shielded space;
at least one discharge opening provided through the sleeve, wherein the discharge opening is oriented to direct a burning fuel-air mixture from the shielded space and towards the plurality of fuel sprays within a region surrounding the fuel injection valve; and
wherein the heatable member has a tip located within 3 millimeters of the centerline of the intake opening and the sleeve restricts flow between the shielded space and the combustion chamber so that combustion of the combustible gaseous fuel within the shielded space produces a pressure therein that is higher than the pressure within the combustion chamber and the pressure is high enough to propel the burning fuel-air mixture into the combustion chamber and into contact with the plurality of the fuel sprays.

In preferred embodiments the tip of the heatable member is located within 1 millimeter of or level with the centerline of the intake opening.

In a preferred embodiment, the ignition fuel spray is oriented so that when the ignition fuel spray exits its respective fuel injection port a substantial portion of the ignition fuel spray is flowing in a spray direction that is oriented less than or equal to 25 degrees from an axis perpendicular to a plane that is tangential to the sleeve at the impingement point. For the purposes described herein, a "substantial portion" of the ignition fuel spray is flowing in a spray direction that is oriented less than or equal to 25 degrees from an axis perpendicular to a plane that is tangential to the sleeve at the impingement point, when, during engine operation, each injection event causes an amount of fuel from the ignition spray to enter the shielded space that is sufficient to form a combustible mixture that is ignitable to propel a burning fuel-air mixture into the combustion chamber where it ignites a combustible mixture within a region surrounding the fuel injection valve.

More preferably, the spray direction of the ignition fuel spray directs a substantial portion of the fuel spray in a direction that is substantially perpendicular to the plane that is tangential to the sleeve at the impingement point. Because fuel diverges from the centerline of the ignition fuel spray as it travels away from the fuel injection nozzle, the centerline of the ignition fuel spray can be in a direction that is not perpendicular to the plane that is tangential to the sleeve at the impingement and a substantial portion of the fuel within the ignition spray can still be flowing substantially perpendicular to such plane when it strikes near the impingement point. However, the most preferred arrangement is when the central axis of the ignition fuel spray is substantially perpendicular to the plane that is tangential to the sleeve at the impingement point.

For a cylindrical shape, there is only one plane that is tangential in all directions for a given point on the cylinder. Shapes other than a cylinder can be employed for the sleeve at the impingement point, and the definition of the directional orientation of the ignition fuel spray relative to the plane that is tangential to the surface can also be applied to other sleeve shapes. For sleeve shapes that do not have a tangential plane, the equivalent approach would be to employ an orientation for the ignition fuel spray that results in a reduction of the momentum and velocity of the fuel that enters the shielded space to thereby form a combustible mixture therein.

In preferred embodiments the fuel injection valve has an elongated body with a longitudinal axis that is parallel to a longitudinal axis of the cylinder. In a preferred arrangement, the end of the ignition device disposed within the combustion chamber is angled towards the fuel injection valve whereby the ignition device has a longitudinal axis that is at an acute angle to the longitudinal axis of the fuel injection valve.

In one embodiment, each one of the plurality of fuel injection ports is oriented to direct the plurality of fuel sprays into the combustion chamber at a first injection angle measured from the cylinder head, except for the fuel injection port that is associated with the ignition fuel spray, which is oriented to direct the ignition fuel spray into the combustion chamber at a second injection angle, different from the first injection angle. The second injection angle is predetermined by the alignment of the plane that is tangential to the sleeve at the impingement point relative to the fuel injection port, whereas the first injection angle is predetermined by the desired distribution pattern for introducing the gaseous fuel into the combustion chamber.

In another embodiment, at least one of the plurality of fuel sprays is introduced into the combustion chamber through one of the plurality of fuel injection ports that is oriented to direct the at least one fuel spray at an injection angle measured from the cylinder head that is different from that of the ignition fuel spray. The injection angle of the plurality of fuel sprays is preferably between 10 and 25 degrees measured from the cylinder head. In some embodiments, the injection angle for the plurality of fuel sprays can be smaller than the injection angle for the ignition fuel spray.

In preferred embodiments, the engine is operable with a compression ratio up to 25:1, and more preferably between 13:1 and 25:1. An engine with a variable compression ratio can be employed to change the compression ratio between 13:1 and 25:1, for example, based upon an operating parameter such as engine load. That is, at low loads, a higher compression ratio can be employed to increase in-cylinder temperature at the end of the compression stroke to improve the combustion process and reduce the quantity of unburned hydrocarbons exhausted from the engine. At higher loads a reduced compression ratio can be employed to allow for a reduced peak cylinder pressure and lower combustion noise. With such a method, the thermal efficiency of the engine can be increased.

The size of the fuel injection valve's fuel injection ports are determined by the collective flow cross section open area required for the implementation of full load operation. Consequently, to achieve a desired duration for the fuel injection event for stable ignition during operation at lower loads, a fuel injection valve that is operable to modulate mass flow rate between zero and a maximum mass flow rate during an injection event is needed. Accordingly, a preferred fuel injection valve comprises an actuator that can be controlled to control movement of the valve needle, and consequently mass flow rate through the fuel injection ports. For example an injection valve that employs a piezoelectric or magnetostrictive actuator would be suitable for this purpose. Tests have shown that adjusting the time-behavior of the injection of the main fuel quantity by varying the stroke of the valve needle during the injection process can provide a means for controlling the characteristics of the combustion process.

Known actuators for fast operation of the fuel injection valve can be employed, such as hydraulic, electromagnetic, piezoelectric, and magnetostrictive actuators. For a hydraulically actuated fuel injection valve, an electromagnetic, piezoelectric, or magnetostrictive actuator can be used to operate the hydraulic valve that controls the flow of hydraulic fluid in and out of the fuel injection valve.

An electronic controller preferably controls actuation of the fuel injection valve using electronic map control, for fuel metering, adjusting timing for the start of injection, and controlling mass flow rate during an injection event.

The ignition fuel spray preferably has a free length of between about 3 and 8 millimeters. The free length is the distance between the fuel injection port that is aimed at the ignition device and the impingement point where the ignition fuel spray impinges upon the ignition device. The preferred free length corresponds to between 5% and 10 % of the diameter of the piston bowl, with lower percentages within this range being generally associated with larger piston bowl diameters and higher percentages within this range being generally associated with smaller piston bowl diameters. In a preferred embodiment, the gaseous fuel injection pressure is kept at a constant pressure between 200 and 300 bar.

The intake opening can be one of a plurality of intake openings with each intake opening positioned near the impingement point so that at least some of the combustible gaseous fuel from the ignition fuel spray that impinges upon the ignition device flows through the plurality of intake openings and into the shielded space. In preferred embodiments the impingement point is equidistant from the center of each of the intake openings. When there are two intake openings, the impingement point can be the midpoint of a straight line drawn between the centers of each of the two intake openings. Engine tests have shown that good results can be achieved with a spacing between the centers of two intake openings of about 3 millimeters.

The discharge opening can be one of a plurality of discharge openings. Each one of the discharge openings is spaced further from the impingement point than the spacing between the intake opening and the impingement point. Preferably, the size of each one of the plurality of discharge openings is determined by the combined flow area required to allow a desired flow through the plurality of discharge openings during full load operating conditions. In a preferred embodiment, the combined open area of the intake and discharge openings is between about 0.75 and 5.0 square millimeters.

In preferred embodiments, the sleeve can be equipped with between two and ten fuel passage openings, and more preferably with four to six openings. The number of openings is chosen as a function of the piston diameter, the combustion chamber diameter, the maximum crankshaft speed, and the general operating conditions.

In a preferred embodiment, the intake opening(s) are provided through a lateral surface of the sleeve and the discharge opening(s) are provided through a dome-shaped end surface of the sleeve and their functionality is determined by their respective spacing from the impingement point where the ignition fuel spray is aimed.

The sleeve preferably has a closed end with the intake opening(s) and the discharge opening(s) being the only means for fluid communication between the combustion chamber and the shielded space.

In a preferred embodiment, there are two intake openings and two discharge openings and each opening is round and has a diameter that is no less than 0.5 millimeter and no more than 1.2 millimeters.

The effectiveness of the ignition device depends upon the sleeve being designed for a plurality of functions that are balanced against each other. On the one hand, the sleeve functions to shield the igniter from being fully exposed to the pulsating flows of the fuel-air mixture in the combustion chamber and the cooling effects of the intake charge and the gaseous fuel that are introduced into the combustion chamber. For this function, the sleeve is preferably closed-ended and surrounds the igniter to restrict flow between a shielded space around the igniter and the combustion chamber. On the other hand, for the ignition device to function, some fluid communication is needed between the combustion chamber and the shielded space so that a sufficient quantity of gaseous fuel can enter the shielded space to form a combustible fuel-air mixture that can be ignited by coming into contact with a hot surface of the igniter. For this function, the sleeve has at least one intake opening that allows fluid communication between the combustion chamber and the shielded space. The size and position of the intake opening(s) are selected so that the portion of the ignition fuel spray that enters into the shielded space through the intake opening(s) provides substantially all the fuel that is needed to initiate combustion within the shielded space and the combustion chamber. Accordingly, the ignition device is capable of igniting a combustible fuel-air mixture that forms within the shielded space and is designed to propel a burning fuel-air mixture into the combustion chamber. The discharge opening(s) provided through the sleeve allow a burning fuel-air mixture to exit the shielded space. Because the disclosed arrangement allows the needed amount of gaseous fuel to flow into the shielded space through the intake openings, the discharge opening(s) can be sized and oriented solely for directing a burning fuel-air mixture towards predetermined spaces within the combustion chamber to ignite the rest of the gaseous fuel. The total open area provided by the intake and discharge openings is very much less than the open area provided by previously known perforated or open-ended shields. Another benefit of the disclosed sleeve is that fluid flow between the combustion chamber and the shielded space is restricted for fluids entering and exiting the shielded space. That is, once a combustible fuel-air mixture forms within the shielded space and is ignited by contacting the hot surface of the igniter, pressure can build within the shielded space. Previously known shields, which have open ends or highly perforated sleeves, do not restrict flow back into the combustion chamber to the same degree. It is believed that a benefit of the present design is that it allows higher pressures to build, which helps to propel the burning fuel-air mixture through the discharge opening(s).

In preferred embodiments, the ignition device's discharge opening(s) are oriented to direct the burning fuel-air mixture towards the plurality of fuel sprays where a fuel-rich combustible mixture is provided.

As described above, the ignition fuel spray is at least one of a plurality of fuel sprays and the fuel sprays that are not aimed at the ignition device are oriented to distribute gaseous fuel uniformly within the rest of the combustion chamber to mix with the intake charge and form a combustible mixture. In preferred embodiments, the nozzle for the fuel injection valve can employ between four and twelve fuel injection ports, depending upon factors such as the diameter of the combustion chamber, the swirl-amplification of the fuel-air mixture formation that is required as a function of the maximum crankshaft speed, and of the general operating conditions. For example, more injection ports are normally preferred for larger combustion chambers.

Experiments have shown that the disclosed engine design, which combines an ignition device with an ignition spray of short free length, and a high compression ratio typical of self-igniting internal combustion engines (diesel engines), enables operationally dependable, reliable and low-emission operation of an internal combustion engine. Furthermore, in comparison to known configurations, an ignition device that comprises a sleeve disposed around an igniter to provide a shielded space next to the igniter can be employed to significantly reduce the heating power to be supplied to the igniter.

The igniter is preferably electrically heated, such as, by way of example, a glow plug. However, the glow plug should be designed for continuous operation under the operating conditions associated with the present engine. The igniter and/or the sleeve can comprise a ceramic surface. Furthermore, a combustion catalyst can be deposited on at least a portion of the igniter or sleeve to lower the operating temperature needed for stable combustion.

In a preferred arrangement, the gaseous fuel injection nozzle is aligned along the center of the combustion chamber recess. This centric arrangement results in a uniformly distributed injection of the gaseous fuel into the combustion chamber recess, and is conducive to a complete mixing with the air within the intake charge. Furthermore, the centric arrangement of the gaseous fuel injection nozzle makes it possible to design the cylinder head as a three-valve or four-valve cylinder head.

In a preferred method, an ignition quantity of fuel that represents 5% to 10% of the fuel quantity needed at full load is introduced into the combustion chamber in a first injection event. A second injection event is employed to inject a main quantity of fuel into the combustion chamber to supplement the ignition quantity of fuel to provide the amount of fuel required to satisfy the demanded engine load, as determined by the engine controller by referring to an engine map. This allows the timing for the first injection event to be governed by the desired ignition timing and the timing for the second injection event to be governed by timing that can result in improved combustion characteristics. For example, the two separate fuel injection events can be timed to provide more intensive and thus more stable ignition of the fuel-air mixture without an increase in the surface temperature of the igniter, a prerequisite for lower emissions of carbon monoxide and unburned fuel. In addition, because some of the fuel is introduced during the first injection event, this results in a smaller ignitable mixture volume at the time of the beginning of combustion, which leads to a lower heat release rate and thus less combustion noise.

For precise control the injection process and to ensure that the cylinders of the internal combustion engine follow the same combustion sequence, the engine can further comprise sensors and/or electronic controllers capable of detecting the time of injection. The preferred method can employ variable mass flow rates, achieved by controlling the stroke of the valve needle, independent of the operating point, by monitoring the movement of one or all of the valve needles.

On account of the high ignition reliability of the fuel-air mixture that is achievable with the disclosed ignition device, the engine's exhaust gas is particularly suitable for re-circulating a controlled amount back into the engine's air intake system, using what are known as techniques for exhaust gas recirculation ("EGR"). Accordingly, in a preferred embodiment the engine further comprises an EGR system for directing into an air intake system, a portion of the exhaust gas exhausted from the combustion chamber. The recirculated exhaust gas can be cooled or uncooled before being introduced into the air intake system, depending upon the engine's operating conditions. With the disclosed method, exhaust gas recirculation rates of up to 70% can be employed to reduce nitrogen oxide emissions.

### Brief Description of the Drawings

Further advantageous embodiments of the invention can be found in the description of the figures, which illustrates in more detail a preferred embodiment of the invention.
Fig 1 shows a side view of the gaseous fuel injection nozzle and ignition device disposed within the combustion chamber;
Fig. 2 shows a detailed view of a prior art ignition device with the lower portion of the housing or holder into which the igniter is mounted;
Fig. 3 shows a detailed view of an embodiment of the ignition device of Fig. 1, shown with half of the ignition device in a cut away view to show the position of the igniter within the sleeve;
Fig. 4 shows a plan view of the cylinder head viewed from the bottom of the combustion chamber as if the piston were removed, showing the position of the fuel injection valve relative to the ignition device;
Fig. 5 is a partial section view indicated by a section line shown in Fig. 4. The partial section of Fig. 5 shows outlines of fuel sprays indicating preferred injection angles for directing an ignition fuel spray towards the ignition device and into the combustion chamber;
Fig. 5A is an enlarged view of a detail from the section view of Figure 5, showing the physical relationship between the nozzle of the fuel injection valve and the ignition device;
Fig. 6 is a drawing that represents a preferred command pulse for controlling the actuation of a fuel injection valve to control the mass flow rate for introduction of the gaseous fuel into the combustion chamber in a single injection event;
Fig. 7 is a drawing that represents another preferred command pulse for controlling the actuation of a fuel injection valve to control the mass flow rate for introduction of the gaseous fuel into the combustion chamber, in a two separate injection events; and
Fig. 8 shows an overall schematic diagram of the fuel and hydraulic systems associated with the gaseous fuel injection valve, and the controller for these systems.

### Detailed Description

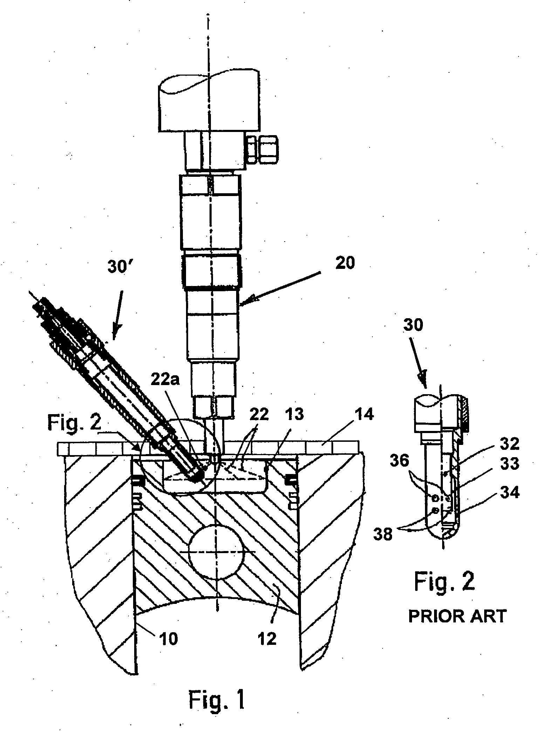

Fig. 1 is a partial cross-section of a gaseous-fueled internal combustion engine illustrating a preferred embodiment of a combustion chamber, which is defined by cylinder 10, piston 12, which is reciprocable within cylinder 10, and cylinder head 14, which covers the top end of cylinder 10. Fuel injection valve 20 and ignition device 30' are mounted in cylinder head 14 with respective tips that extend into the combustion chamber. This internal combustion engine can be of an inline- or V- design with various desired numbers of cylinders and displacement.

Piston 12 preferably is substantially the same as the piston employed in an equivalent diesel-fueled engine, and typically comprises chamber recess 13. A simple shape for chamber recess 13 is shown for illustrative purposes, but persons skilled in the technology will understand that other shapes can be employed. For example, smaller engines can use a re-entrant combustion chamber with a pip to promote turbulence for improved mixing. The rapid formation of a fuel-air mixture within the combustion chamber can also be supported by turbulence and swirl within the cylinder charge during a fuel injection event.

The tip of fuel injection valve 20 comprises a gaseous fuel injection nozzle with a plurality of fuel injection ports through which gaseous fuel is introduced directly into the combustion chamber. At least one of the fuel injection ports is aimed at an impingement point on ignition device 30'. In the illustrated embodiment, fuel injection valve 20 is aligned with the centerline of combustion chamber recess 13 and preferably comprises between four and twelve fuel injection ports with fuel sprays 22 from such injection ports depicted in Figure 1 by dashed lines. One of the fuel injection ports is aimed to direct fuel spray 22a at an impingement point on ignition device 30'.

With reference to Figure 2, prior art ignition device 30 comprises igniter 32 and sleeve 34, which is disposed around igniter 32 to provide a shielded space between igniter 32 and the inner surface of sleeve 34. In the illustrated embodiment, the shielded space comprises an annular space between igniter 32 and the interior wall of sleeve 34 and the space between the free end of igniter 32 and the dome-shaped closed end of sleeve 34. A dome-shaped end is preferred compared to a square or flat end because a domed-shape provides better structural strength, while reducing the extent to which ignition device 30 protrudes into the combustion chamber. Reference number 33 identifies the shielded space in Figure 2. The impingement point is a point on the outer surface of sleeve 34 that is proximate to at least one intake opening 36 provided through sleeve 34. Intake opening 36 and discharge opening 38 allow fluid communication between shielded space 33 and the combustion chamber. In the prior art igniter illustrated in Figure 2 there are two intake openings 36. Prior art ignition device 30 shows the tip of igniter 32 level with the horizontal centerline between discharge openings 38.

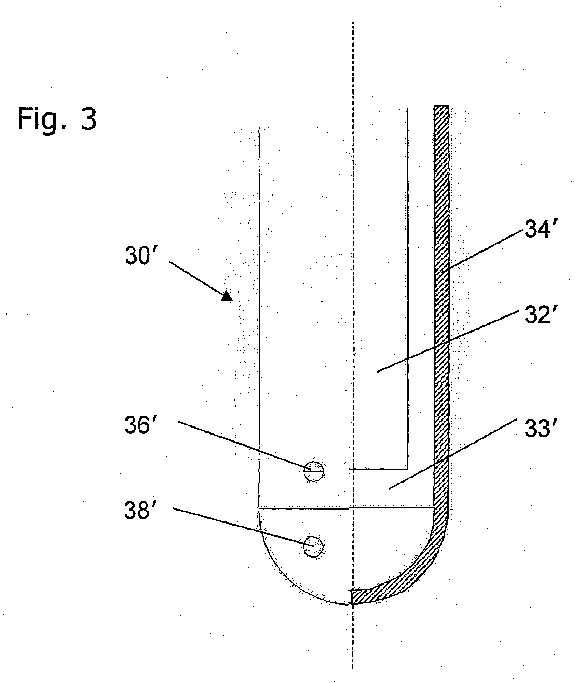

With reference to Figure 3, the open area and the position of intake opening(s) 36' relative to the impingement point are designed to allow an amount of gaseous fuel to enter shielded space 33' that is sufficient to ignite and cause ignition of substantially all of the gaseous fuel in the combustion chamber. Experiments have shown that the illustrated arrangement with two intake openings 36', each with a diameter of between 0.8 and 1.2 millimeters, can be effective. Experiments using a hole diameter of 0.55 millimeter for each of two intake and two discharge openings was tried, and the engine was operable but the ignition device was less effective. It is expected that the effectiveness of the smaller holes can be improved by increasing the number openings. Computational fluid dynamic analysis can be used to further study intake opening size, position and number. It is presently understood that sizing intake opening 36' too small will not allow a sufficient quantity of fuel to enter shielded space 33', whereas sizing the intake opening too large can lead to excessive flow between shielded space 33' and the combustion chamber, which can cause excessive cooling of igniter 32' and reduce pressure build up within shielded space 33', causing slower or less extensive penetration of the burning fuel-air mixture that is propelled into the combustion chamber.

Figure 3 illustrates a preferred embodiment of ignition device 30' wherein discharge openings 38' are positioned in the dome-shaped end of sleeve 34'. An advantage of locating discharge openings 38' in the dome-shaped end is that the length of ignition device 30' can be shorter than if the discharge openings were located in the cylindrical side walls as they are in the prior art igniter 30 of Figure 2.

With some piston head designs, such as ones that employ a pip, depending upon how far ignition device 30' protrudes into the combustion chamber, a dimple can be formed in the piston head opposite ignition device 30' to prevent contact therebetween during engine operation.

Figure 3 also illustrates a preferred position of igniter 32' within sleeve 34'. The end of igniter 32' is preferably within 3 millimeters of the centerline of intake opening 36', with more preferred embodiments locating the end of igniter 32' within 1 millimeter of the centerline of intake opening 36' or level with the centerline of intake opening 36', as shown in Figure 3.

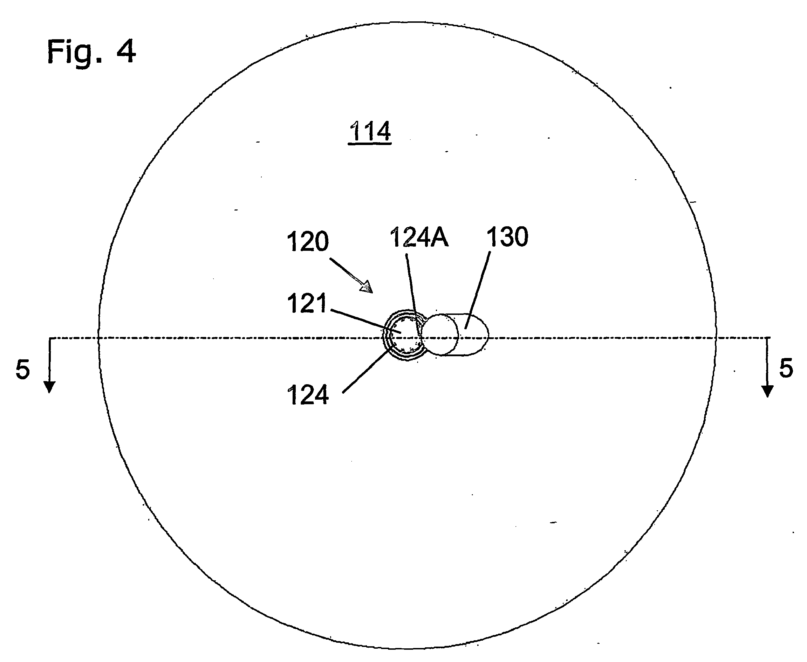

Figure 4 is a plan view of a cylinder head viewed from within the combustion chamber as if the piston were removed. In this embodiment, elements that correspond to similar elements to those in Figures 1 through 3 are indicated by reference numbers increased by an increment of 100. For simplicity, the intake and exhaust valves are not shown, but with the positioning of injection valve 120 and ignition device 130 in the central region of the cylinder head area, two, three, and four valve designs can be accommodated.

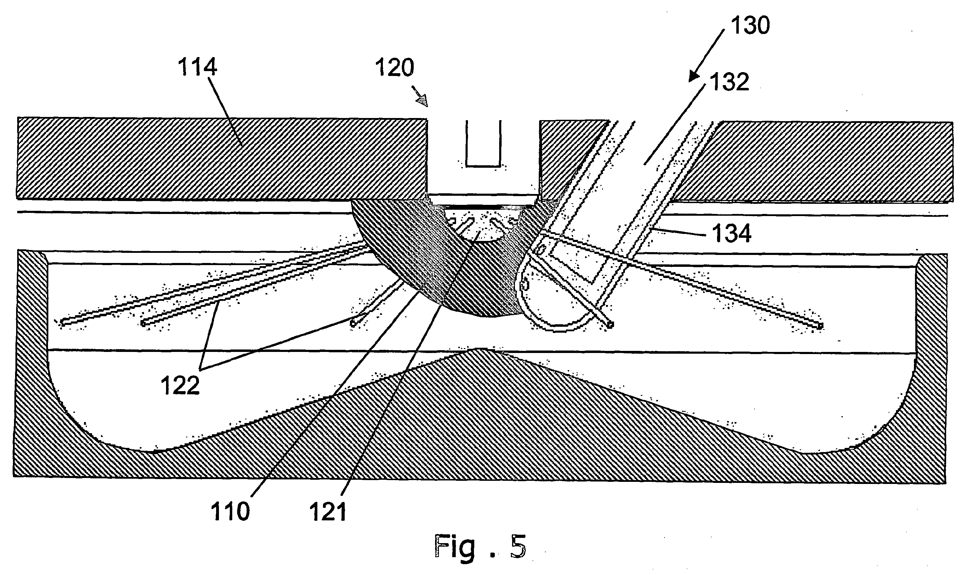

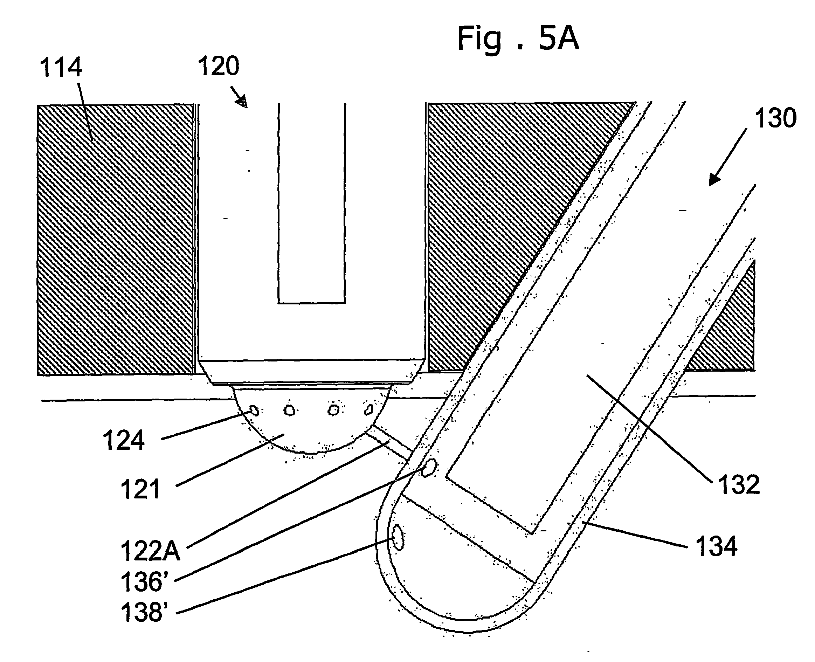

Fuel injection valve 120 comprises nozzle 121 with fuel injection ports 124. Fuel injection port 124A is oriented to direct an ignition fuel spray towards ignition device 130, which is inclined towards nozzle 121. The position of ignition device 130 in cylinder head 114 is chosen so that the fuel spray introduced through fuel injection port 124A possesses a free spray length of between 3 millimeters and 8 millimeters, or 5% to 10% of the diameter of the combustion chamber recess depending upon the size of the combustion chamber. The amount of fuel introduced into the engine depends upon operating conditions such as load, and whether the load is static or dynamic (i.e. changing). Experimental results have shown that, under expected conditions, the above-stated spacing between the fuel injection port and the impingement point results in a sufficient quantity of gaseous fuel entering shielded space 33' to form a combustible fuel-air mixture that comes into contact with the igniter. A "sufficient quantity of gaseous fuel" is defined herein as a quantity of fuel that results in the formation of a combustible mixture within the shielded space that is ignitable to produce a burning fuel-air mixture capable of exiting the shielded space and igniting a combustible fuel-air mixture within a region surrounding fuel injection valve nozzle 121. With reference to Figure 5, hatched region 110 is the region that surrounds fuel injection valve nozzle 121 towards which the burning combustible fuel-air mixture is directed. That is, discharge openings 138' are oriented so that the burning combustible fuel-air mixture propelled from shielded space 33' ignites the fuel in region 110.

Figure 5 is a partial section view of the section indicated by section line 5 in Figure 4, and Figure 5A is an enlarged view of the area near fuel injection valve nozzle 121 and ignition device 130. Fuel injection valve 120 and ignition device 130 are mounted in cylinder head 114 and protrude therefrom. Igniter 132 is shown disposed within sleeve 134 of ignition device 130.

Axes 122 illustrate the direction that fuel sprays are introduced into the combustion chamber through fuel injection ports 124, demonstrating by way of example, a preferred injection angle for the depicted combustion chamber geometry. As is well known to those skilled in the technology, gaseous fuel that is introduced into a combustion chamber in this manner disperses from axes 122 with more dispersion occurring as the fuel travels further from nozzle 121. Axes 122 are intended to show only the injection angle of the central axes of the fuel sprays. Fuel injection ports 124 are preferably oriented to provide an injection angle of between 10 and 25 degrees, which is selected to provide uniform distribution of the gaseous fuel within the combustion chamber, with the selected injection angle being dependent upon an engine's combustion chamber geometry. In preferred embodiments, the selected injection angle is chosen to optimize fuel spray length while aiming the fuel sprays at turbulent regions within the combustion chamber. For improved fuel distribution, longer fuel spray lengths are preferred.

In the illustrated embodiment, as shown in Figure 5A, compared to the other fuel sprays, the injection angle of ignition fuel spray 122A, which is introduced through fuel injection port 124A, has a different injection angle, and fuel injection port 124A is positioned at a lower level on nozzle 121 compared to fuel injection ports 124. The injection angle of ignition fuel spray 122A is determined by the angle required to orient the direction of ignition fuel spray 122A so that ignition fuel spray 122A is directed towards an impingement point on the surface of the sleeve so that a substantial portion of the ignition fuel spray flows in a spray direction that is less than or equal to 25 degrees from an axis perpendicular to the plane that is tangential to the sleeve at the impingement point.

In order to introduce the gaseous fuel directly into the combustion chamber near top dead center, the gaseous fuel is supplied to fuel injection valve 120 at high pressure. For example, gaseous fuel can be supplied with a pressure of between 200 and 300 bar, which results in the gaseous fuel being injected into the combustion chamber at high velocity. Ignition of the gaseous fuel is improved by reducing the velocity of the fuel that is brought into contact with the igniter. When the gaseous fuel is directed towards sleeve 134 so that the fuel is flowing in a direction that is perpendicular to the surface of sleeve 134 when it hits the surface, the change in momentum caused by the fuel striking the sleeve surface is maximized whereby the reduction in fuel velocity is also maximized. Accordingly, in the most preferred embodiment the ignition fuel spray is oriented so that a substantial portion of the fuel is flowing in a direction that is perpendicular to the plane that is tangential to the surface of the sleeve at the impingement point (as shown in Figure 5A). However, in some cases, constraints imposed by an engine's combustion chamber geometry or cylinder head design can dictate a less preferred orientation for the ignition fuel spray, and experiments have shown that orientations where the ignition fuel spray direction is less than or equal to 25 degrees from a perpendicular alignment have also yielded working embodiments, though less preferred.

With reference to Figure 5A, an enlarged side view is shown of the arrangement between nozzle 121 of fuel injection valve 120 and ignition device 130. It is believed that ignition fuel spray 122A entrains some air as it travels towards the impingement point, but that it also mixes with air that has flowed into shielded space 33' during the engine piston's intake and compression stroke. It is also believed that directing fuel spray 122A towards an impingement point, rather than being aimed directly at intake opening 136' results in improved mixing and reduced cooling effects.

When a combustible fuel-air mixture forms within shielded space 33', it contacts the hot surface of the igniter, and is ignited. The pressure within shielded space 33' increases rapidly as a result of combustion and the restricted flow between the shielded space 33' and the combustion chamber. This elevated pressure propels a burning fuel-air mixture into the combustion chamber through at least one discharge opening 138'. In the illustrated embodiments, there are two discharge openings 38' and 138', in Figures 3 and 5A respectively, with only one half of the sleeve being shown in Figure 5A.

The discharge openings are spaced apart from the intake openings so that the discharge openings can be oriented to aim the burning fuel-air mixture to region 110 of the combustion chamber for efficient burning of the combustible fuel-air mixture that forms as a result of an injection event. The discharge openings are spaced further from the impingement point than the intake openings. Under preferred operating conditions, an injection event continues while the burning fuel-air mixture emerges from shielded space 33', and it is believed that the spacing of the discharge openings from the impingement point reduces interference between the burning fuel-air mixture that emerges from ignition device 30' and the ignition fuel spray that is directed towards the impingement point on ignition device 30'. Reducing such interference can help to produce a very short ignition lag, which has a positive effect on the operating characteristics of the internal combustion engine. Compared to liquid fuels, a fuel injection event with a longer duration can be required to inject a gaseous fuel. Accordingly, the arrangement of the intake and discharge openings in relation to the impingement point is important because fuel injection valve 20 can continue to inject gaseous fuel into the combustion chamber after combustion is initiated because the ignition fuel spray does not interfere significantly with the spread of the burning fuel-air mixture propelled through the discharge openings. A longer duration for a fuel injection event can be advantageous in some preferred embodiments, because then the burning fuel-air mixture can be aimed at region 110 that surrounds fuel injection valve nozzle 121 where the fuel sprays that are being simultaneously injected into the combustion chamber. In such embodiments, when a single fuel injection event is employed in an engine cycle, the ignition lag can be shorter than the time duration of the corresponding injection event.

Another reason for spacing the discharge opening further from the impingement point is that this arrangement ensures that most of the fuel enters into shielded space 33' through the intake openings, allowing some air from within shielded space 33' to be displaced back into the combustion chamber through the discharge openings, thereby facilitating the entry of gaseous fuel into shielded space 33' through the intake openings at the beginning of the injection event. Accordingly, there are a number of advantages associated with the disclosed arrangement with at least one intake opening and at least one discharge opening, with the function of these openings determined by their respective spacing from the impingement point. As shown in the illustrated embodiments, the discharge openings are positioned below the intake openings. In the illustrated embodiments, the impingement point is preferably equidistant from the intake openings and could be the mid-point between them or another location along the center axis of ignition device 30', 130 that is closer to the intake openings than to the discharge openings.

The gaseous fuel injection valve can be a hydraulically actuated valve, with the hydraulic pressure being controlled by an electromagnetic hydraulic valve. To implement pre-injection and division of the main injection into several injection steps or "pulses", it is possible to use a hydraulically switched valve driven by a piezoelectric actuator, since such a valve possesses a sufficiently high switching frequency. Tests have shown that a hydraulically activated valve driven by a piezoelectric actuator in combination with the hydraulic operation of the gaseous fuel valve meets the requirements for switching frequency and accuracy for controlling the beginning and duration of injection.

In another embodiment, a gaseous fuel injection valve that employs a needle that is directly actuated by an electromagnetic actuator can be employed. An example of such an injection valve is disclosed in U.S. Patent No. 6,298,829. In such a fuel injection valve, hydraulic actuation fluid is not needed and the movement of the armature of the electromagnetic actuator causes a corresponding movement of the needle to open and close the fuel injection valve. A fuel injection valve with such an electromagnetic actuator can provide the necessary speed for allowing injection events with short pulse widths and more than one injection event in a single engine cycle.

In still other preferred embodiments, the fuel injection valve can be "directly" actuated by a piezoelectric or magnetostrictive actuator that provides the motive force for displacing a valve member to open and close the fuel injection valve. Such actuators can be operated with even shorter fuel injection pulse widths and can be suitable for engines that are designed to operate at can be employed with higher crankshaft speeds. A further advantage of using a directly actuated injection valve is that in addition to providing the requisite speed for multiple injection pulses during a single engine cycle, piezoelectric and magnetostrictive actuators can also be controlled to enable "rate shaping" which means that the degree of displacement caused by the actuator during an injection pulse can be controlled to adjust mass flow rate through the fuel injection valve during a fuel injection pulse.

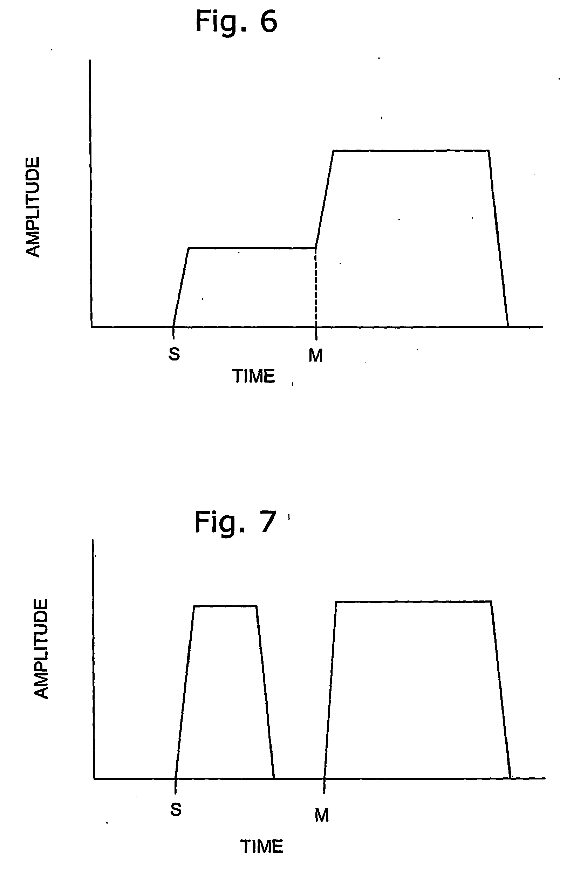

The graphs of Figures 6 and 7 plot the amplitude of a command pulse for controlling a directly actuated fuel injection valve to introduce fuel into a combustion chamber for one combustion cycle, with a separate command pulse for each combustion cycle.

The amplitude that marks the vertical axis of these graphs represents different units for different types of actuators. For example, for a magnetostrictive actuator, amplitude represents electrical current directed to a coil to produce a magnetic field. In another example, for a piezoelectric actuator, amplitude represents the voltage applied to the piezoelectric elements. Movement of the valve needle correlates generally to the amplitude of the command pulses, with more fuel being introduced when a larger amplitude is commanded.

With respect to Figure 6, in a preferred method the time between S and M is about 2 ms. The purpose of introducing a smaller quantity of fuel at the beginning of the injection event is to introduce only the amount of fuel that is needed to initiate combustion so that a sufficient amount of fuel is ignited by the ignition device to produce a burning combustible mixture that is directed back into the combustion chamber to ignite a combustible fuel mixture within region 110, which surrounds fuel injection valve nozzle 121. Because gaseous fuels can have a longer ignition delay than conventional auto-igniting liquid fuels, shaping the mass flow rate for introducing gaseous fuel into a combustion chamber is more important than it is for liquid fuels. Because of the ignition delay the ignition fuel spray is introduced into the combustion chamber much earlier than one would want to inject a main fuel pulse. Accordingly, a smaller amplitude is employed between the start of the injection event at time S and the start of the main fuel pulse at time M to avoid premature introduction of an excessive amount of fuel into the combustion chamber. The timing for time M is typically between 5 to 34 degrees before top dead center; and the duration of the fuel injection event can continue well after top dead center, depending upon the desired heat release.

In the method illustrated by Figure 7, a first injection event begins at time S followed by a second injection event beginning at time M. In this embodiment, an injection duration for the first injection event of between about 0.2 and about 0.5 milliseconds has been successful with the time between time S and time M being between 0.25 and 1 milliseconds. Again, time M can occur between 5 and 34 crank angle degrees before top dead center and time S can be between 6 and 13 crank angle degrees before time M.

Ignition device 30' can employ an igniter with a ceramic surface, because ceramic materials can be fabricated with the durability needed for the harsh conditions under which the ignition device operates. To further improve the stability of ignition device 30', the shielding sleeve 34' can also be a ceramic material. A catalytic coating can also be provided on sleeve 34', comprising platinum and/or palladium to accelerate the ignition process for improved combustion stability. The use of such a catalytic coating is especially advantageous for smaller engines, because the size of the combustion chamber normally dictates a shielded space with a smaller volume, leading to a smaller fuel volume being ignited at the hot surface; in such an engine, an ignition device without a catalytic coating could result in slower combustion and correspondingly higher hydrocarbon and carbon monoxide emissions.

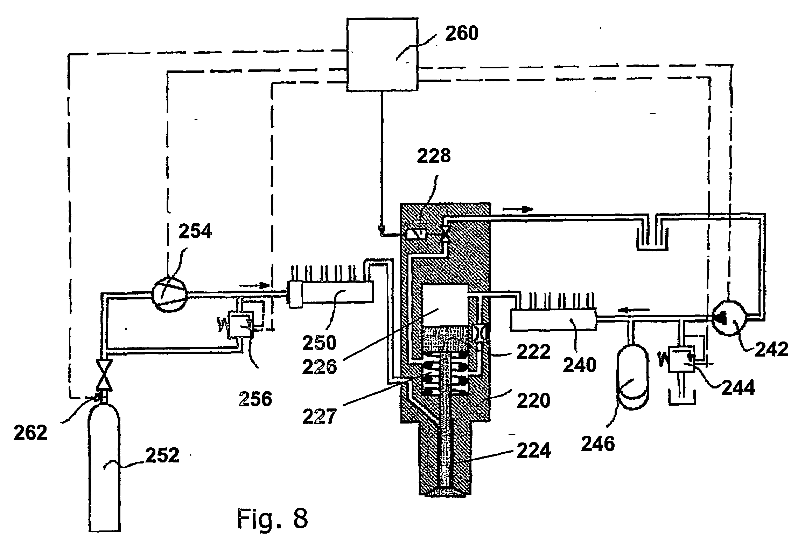

The method of operating an internal combustion engine with gaseous fuel being directly injected into the combustion chamber requires a constant high fuel pressure upstream of gaseous fuel injection valve 20. If the engine is to be used in a vehicle, it is necessary to provide an on-board high-pressure fuel supply system. Fig. 8 shows one embodiment of such a fuel system with devices for supplying a gaseous fuel and for providing hydraulic fluid for operating gaseous fuel injection valve 220. Gaseous fuel injection valve 220 is operable by hydraulic fluid pressure, which acts upon piston 222. Piston 222 is associated with valve needle 224 whereby movement of piston 222 causes a corresponding movement of valve needle 224.

In a multi-cylinder internal combustion engine, a gaseous fuel injection valve is provided for each combustion chamber and common hydraulic fluid supply line 240 supplies hydraulic fluid to each one of the fuel injection valves. Hydraulic pump 242 preferably generates a pressure of 250 to 300 bar. The pressure within hydraulic fluid supply line 240 is controlled by pressure control valve 244, and pressure accumulator 246 is filled to maintain hydraulic pressure, even after the engine has been turned off.

On the fuel side, and continuing with the example of a multi-cylinder engine as suggested in Figure 8, gaseous fuel injection valve 220 is supplied with a gaseous fuel pressure of between 200 and 300 bar through a common fuel supply line 250 that supplies fuel to each one of the gaseous fuel injection valves. The gaseous fuel is stored in fuel storage tank 252 and supplied to the fuel supply system at a pressure corresponding to the amount of gaseous fuel remaining therein. When fuel storage tank 252 is filled to maximum capacity, the pressure of the fuel delivered to the fuel supply system will be high, and as the tank is emptied, pressure within fuel storage tank 252 decreases. If gaseous fuel storage tank 252 is fully charged, for example, with a pressure of between 200 and 300 bar, then controller 260 determines this from pressure transducer 262 and controller 260 considers engine operating conditions when controlling compressor 254 and pressure control device 256 to supply the needed amount of gaseous fuel to the injection valves at the desired pressure. As more gaseous fuel is removed, and the pressure is correspondingly lower, as detected by pressure transducer 262, and controller 260 takes this into account when controlling compressor 254 and pressure control device 256.

Controller 260 can also be programmed and wired to control the hydraulic fluid pressure in the hydraulic system by controlling hydraulic pump 242 and pressure control valve 244, and the actuation of fuel injection valve 220 and the other fuel injection valves in a multi-cylinder engine. In the illustrated embodiment, controller 260 is wired to control solenoid valve 228 by opening or closing the hydraulic fluid drain line. When controller 260 opens control solenoid valve 228 hydraulic fluid is drained from spring chamber 227 within injection valve 220, and the pressure of the hydraulic fluid in control chamber 226 (above spring chamber 227) acts to push piston 222 downwards, whereby valve needle 224 also moves downwards to open fuel injection valve 220 and inject fuel into the combustion chamber. The illustrated fuel injection valve has an outward opening needle, and those skilled in the technology will understand that an inward opening needle is also suitable, and in either case, the nozzle of the fuel injection valve is preferably provided with features for directing fuel sprays into the combustion chamber and aiming one of the fuel sprays towards an impingement point on the ignition device.

The fuel system of Figure 8 can also be employed with a directly actuated fuel injection valve, except that instead of a hydraulic fluid system, controller 260 would send control signals directly to the fuel injection valve to cause actuation by controlling the electrical current or voltage that is directed to the actuator.

While particular elements and embodiments of the present invention have been shown and described, it will be understood, of course, that the invention is not limited thereto since modifications may be made by those skilled in the art without departing from the scope of the present disclosure, particularly in light of the foregoing teachings. By way of example, a liquefied gaseous fuel supply system comprising a cryogenic storage tank, a fuel pump, a vaporizer, and associated pressure control devices could be substituted for the compressed gaseous fuel supply system shown in Figure 8.

## Claims

1. An internal combustion engine fueled with a combustible gaseous fuel, said engine comprising:
at least one combustion chamber defined by a cylinder, a piston reciprocable within said cylinder, and a cylinder head that covers an end of said cylinder;
an ignition device with an end disposed within said combustion chamber, said ignition device comprising an igniter that comprises a heatable member to provide a hot surface and a sleeve surrounding said igniter, said sleeve defining a shielded space between said igniter and said sleeve, wherein said heatable member extends into said shielded space from a holder mounted in said cylinder head;
a fuel injection valve disposed within said combustion chamber, said fuel injection valve being operable to introduce said combustible gaseous fuel into said combustion chamber with a plurality of fuel sprays each released from one of a plurality of fuel injection ports, wherein at least one of said plurality of fuel injection ports is oriented to direct a fuel spray, referred to as an ignition fuel spray, towards an impingement point on a surface of said sleeve;
at least one intake opening provided through said sleeve near said impingement point connecting said shielded space to said combustion chamber whereby, when said ignition fuel spray impacts said impingement point, a portion of said combustible gaseous fuel contained within said ignition fuel spray passes through said intake opening and into said shielded space; and
at least one discharge opening provided through said sleeve, wherein said discharge opening is oriented to direct a burning fuel-air mixture from said shielded space and towards said plurality of fuel sprays near said fuel injection valve;
wherein said sleeve restricts flow between said shielded space and said combustion chamber so that combustion of said combustible gaseous fuel within said shielded space produces a pressure therein that is higher than the pressure within the combustion chamber and said pressure is high enough to propel said burning fuel-air mixture into said combustion chamber and into contact with said plurality of the fuel sprays;
**characterized in**
**that** said heatable member has a tip located within 3 millimeters of the centerline of said intake opening.

2. The internal combustion engine according to claim 1, **characterized in that** said heatable member has a tip located within 1 millimeter of the centerline of said intake opening, or that said heatable member has a tip located where it is level with the centerline of said intake opening.

3. The internal combustion engine according to claim 1, **characterized in that** said plurality of fuel injection ports are oriented so that when said ignition fuel spray exits its respective fuel injection port a substantial portion of said ignition fuel spray flows in a spray direction that is oriented less than or equal to 25 degrees from an axis perpendicular to a plane that is tangential to said sleeve at said impingement point, preferably wherein each one of said plurality of fuel injection ports is oriented to direct said plurality of fuel sprays into said combustion chamber at a first injection angle measured from said cylinder head, except for the fuel injection port that is associated with said ignition fuel spray, which is oriented to direct said ignition fuel spray into said combustion chamber at a second injection angle, different from said first injection angle, wherein said second injection angle is predetermined by the alignment of said plane that is tangential to said sleeve at said impingement point relative to said fuel injection port, and said first injection angle is predetermined by the desired distribution pattern for introducing said gaseous fuel into said combustion chamber.

4. The internal combustion engine according to any one of the preceding claims, **characterized in that** said plurality of fuel injection ports are oriented so that when said ignition fuel spray exits its respective fuel injection port a substantial portion of said ignition fuel spray is sprayed in a direction that is substantially perpendicular to a plane that is tangential to said sleeve at said impingement point, and/or that said plurality of fuel injection ports are oriented so that when said ignition fuel spray exits its respective fuel injection port said ignition fuel spray has a central axis that is substantially perpendicular to a plane that is tangential to said sleeve at said impingement point.

5. The internal combustion engine according to any one of the preceding claims, **characterized in that** said fuel injection valve has a longitudinal axis that is parallel to a longitudinal axis of said cylinder, and said end of said ignition device disposed within said combustion chamber is angled towards said fuel injection valve whereby said ignition device has a longitudinal axis that is at an acute angle to said longitudinal axis of said fuel injection valve, and/or that said intake opening is provided through a lateral surface of said sleeve and said discharge opening is provided through a dome-shaped end surface of said sleeve, and/or that said sleeve has a closed end with said intake opening and said discharge opening being the only means for fluid communications between said combustion chamber and said shielded space.

6. The internal combustion engine according to any one of the preceding claims, **characterized in that** at least one of said plurality of fuel sprays is introduced into said combustion chamber through one of said plurality of fuel injection ports that is oriented to direct said at least one fuel spray at an injection angle measured from said cylinder head that is different from that of said ignition fuel spray, preferably wherein said plurality of fuel sprays each have an injection angle that is between 10 and 25 degrees measured from said cylinder head and/or wherein said at least one of said plurality of fuel sprays has an injection angle that is smaller than that of said ignition fuel spray.

7. The internal combustion engine according to any one of the preceding claims, **characterized in that** said engine is operable with a compression ratio up to 25:1, preferably between 13:1 and 25:1, and/or that said engine is operable with a variable compression ratio.

8. The internal combustion engine according to any one of the preceding claims said intake opening is one of a plurality of intake openings provided through said sleeve and each intake opening is located near said impingement point so that a portion of said combustible gaseous fuel contained within said ignition fuel spray enters said shielded space through said plurality of intake openings, preferably wherein there are two intake openings.

9. The internal combustion engine according to any one of the preceding claims, **characterized** said impingement point is equidistant from the center of each of said two intake openings, and/or that the centers of said two intake openings are spaced apart from each other by a distance of about 3 millimeters, and/or that said impingement point is the midpoint of a straight line drawn between the centers of each of said two intake openings, and/or that said two intake openings are the same distance from said end of said ignition device.

10. The internal combustion engine according to claim 8 or 9, **characterized in that** discharge opening is one of two discharge openings provided through said sleeve, preferably wherein each one of said intake openings and said discharge openings is round and has a diameter no less than 0.5 millimeter and no more than 1.2 millimeters.

11. The internal combustion engine according to any one of the preceding claims, **characterized in that** said discharge opening is one of a plurality of discharge openings provided through said sleeve, preferably wherein the size of each one of said plurality of discharge openings is determined by the combined open area required to allow a desired flow through said plurality of discharge openings during full load operating conditions, and more preferably wherein the combined open area of said intake and discharge openings is between about 0.75 and 5.0 square millimeters.

12. The internal combustion engine according to any one of the preceding claims, **characterized in that** said igniter is electrically heated, preferably wherein said igniter is a glow plug and/or wherein at least a portion of said igniter has a ceramic surface and/or wherein at least a portion of said igniter is catalytically coated.

13. The internal combustion engine according to any one of the preceding claims, **characterized** at least a portion of said sleeve is made from a ceramic material, and/or that said sleeve is coated with a catalytic coating for promoting reactions involving said combustible gaseous fuel and air to introduce reaction products into said shielded space that promote ignition at a lower surface temperature.

14. The internal combustion engine according to any one of the preceding claims, **characterized in that** said piston further comprises a recess that further defines the geometry of said combustion chamber, preferably wherein said fuel injection valve is mounted in said cylinder head and aligned with the center of said recess, more preferably wherein the distance between said impingement point and said fuel injection port associated with said ignition fuel spray is between 5% and 10% of the diameter of said recess.

15. The internal combustion engine according to any one of the preceding claims, **characterized in that** said fuel injection valve is mounted in said cylinder head, preferably wherein the distance between said impingement point and said fuel injection port associated with said ignition fuel spray is between 3 millimeters and 8 millimeters, and/or that said fuel injection valve is operable to provide a plurality of individual injection events during a single combustion cycle.

16. The internal combustion engine according to any one of the preceding claims, **characterized in that** the size of each one of said fuel injection ports is determined by the collective open area required to allow a desired flow through said fuel injection ports during full load operating conditions, and/or that said fuel injection valve is operable to modulate mass flow rate between zero and a maximum mass flow rate during an injection event, preferably wherein mass flow rate through said fuel injection valve is controllable by controlling the movement of a needle within said fuel injection valve.

17. The internal combustion engine according to any one of the preceding claims, **characterized in that** the internal combustion engine comprises an exhaust gas recirculation system for directing into an air intake system, a portion of the exhaust gas exhausted from said combustion chamber, preferably wherein said portion of the exhaust is cooled prior to being directed into said air intake system, depending upon measured engine operating conditions, and/or that said fuel injection valve comprises between four and twelve fuel injection ports.

18. The internal combustion engine according to any one of the preceding claims, **characterized in that** said fuel injection valve is switched electromagnetically and hydraulically driven, or hydraulically driven using a hydraulic valve with a piezoelectric actuator, or electronically controlled and directly driven by an electromagnetic actuator, or electronically controlled and driven by a piezoelectric or magnetostrictive actuator.

19. A method of operating a gaseous-fueled internal combustion engine comprising at least one combustion chamber defined by a cylinder, a piston reciprocable within said cylinder, and a cylinder head that covers an end of said cylinder, said method comprising:
introducing a gaseous fuel into said combustion chamber by means of a plurality of fuel sprays released into said combustion chamber from a fuel injection valve disposed within said combustion chamber;
directing one of said fuel sprays, referred to as an ignition fuel spray to an impingement point on a surface of a sleeve that surrounds an igniter so that when said ignition spray exits its respective fuel injection port a substantial portion of said gaseous fuel flows towards said impingement point, whereby some of said gaseous fuel from said ignition fuel spray flows-through an intake opening provided in said sleeve and mixes with air in a shielded space provided between a hot surface of a heatable member of said igniter and said sleeve to form a combustible fuel-air mixture next to said igniter, wherein said heatable member has a tip located within 3 millimeters of the centerline of said intake opening;
igniting said combustible fuel-air mixture by heating a surface of said igniter to a temperature that causes ignition of said combustible fuel-air mixture; and
restricting fluid flow between said combustion chamber and said shielded space and retaining a substantial portion of said combustible fuel-air mixture within said shielded space until combustion of same increases pressure within said shielded space to a magnitude that propels a burning fuel-air mixture therefrom through at least one discharge opening and into contact with said plurality of fuel sprays in said combustion chamber in a region surrounding said fuel injection valve.

20. The method according to claim 19, **characterized in that** said ignition fuel spray is oriented in a spray direction that is between less than or equal to 25 degrees from an axis perpendicular to a plane that is tangential to said sleeve at said impingement point, preferably wherein said spray direction is substantially perpendicular to said plane that is tangential to said surface of said sleeve at said impingement point.

21. The method according to claim 19 or 20, **characterized in that** the method further comprises spacing said discharge opening a distance from said impingement point that is greater than the distance between said intake opening and said impingement point, preferably wherein said distance between said discharge opening and said impingement point provides spacing so that interference from said fuel spray that is directed at said impingement point does not prevent said burning combustible fuel-air mixture from being propelled into contact with said plurality of fuel sprays in said region surrounding said fuel injection valve.

22. The method according to any one of claims 19 to 21, **characterized in that** the method further comprises injecting said gaseous fuel into said combustion chamber at a first mass flow rate when said engine is operating at low load or idle, and injecting said gaseous fuel into said combustion chamber at a second mass flow rate when said engine is operating at high load, wherein said second mass flow rate is higher then said first mass flow rate, preferably wherein the method further comprises controlling the mass flow rate for injecting a desired quantity of said gaseous fuel into said combustion chamber so that the duration of an injection event is longer than an ignition delay associated with the ignition of said gaseous fuel that was directed towards said ignition device at the beginning of said injection event.

23. The method according to any one of claims 19 to 22, **characterized in that** the method further comprises controlling injection timing and injection event duration as a function of measured engine operating conditions and by referring to an electronic engine map, preferably wherein the method further comprises controlling said fuel injection valve to control the mass flow rate of said gaseous fuel that is introduced during an injection event, said method comprising:
referring to said electronic engine map and determining a total amount of said gaseous fuel that will be introduced during an injection event for a detected engine load;
during a first stage of said injection event, selecting a first mass flow rate that will cause said combustible mixture to form within said shielded space; and
during a second stage of said injection event, selecting a second mass flow rate that will augment the gaseous fuel introduced during said first stage to provide said total amount of gaseous fuel during said injection event.

24. The method according to claim 23, **characterized in that** the duration of said first stage begins at least 2 milliseconds before said second stage, and/or that said second stage begins at between about 34 and 5 crank angle degrees before top dead center during a compression stroke, and/or that said gaseous fuel that is introduced during said second stage is ignited during said second stage.

25. The method according to any one of claims 19 to 24, **characterized in that** the method fiuther comprises introducing said gaseous fuel into said combustion chamber in a plurality of injection events during a single engine cycle, preferably
wherein a first injection event is employed to introduce a first quantity of said gaseous fuel into said combustion chamber to be ignited by said ignition device, followed by at, least one other injection event to introduce a second quantity of said gaseous fuel, wherein said first and second quantities of fuel together provide a total quantity of fuel that is equal to an amount determined by an engine controller, with reference to an engine map, and said first quantity of fuel is determined by said engine controller to be a quantity that is sufficient to ensure that said second quantity of fuel is ignited.

26. The method according to claim 25, **characterized in that** said first quantity of said gaseous fuel is no more than 10% by mass of said total quantity of fuel when said engine is operated at full load, and/or that said first quantity of said gaseous fuel is between 5% and 10% by mass of said total quantity of fuel when said engine is operated at full load, and/or that said second injection event begins at between about 34 and 5 degrees before top dead center during a compression stroke, and/or that said second quantity of said gaseous fuel is divided between a plurality of fuel injection events.

27. The method according to claim 26, **characterized** said first injection event has a duration of at least 0,2 milliseconds, preferably wherein said first injection event has a duration less than or equal to 0.5 milliseconds, and/or that said second infection event starts less than or equal to 1 millisecond after the end of said first injection event, preferably wherein said second injection event starts more than 0.2 millisecond after the end of said first injection event.

28. The method according to any one of claims 19 to 27, **characterized in that** the method further comprises electrically heating said igniter to have a surface temperature that is hot enough to ignite said combustible fuel-air mixture, preferably wherein the method further comprises controlling the temperature of said igniter as a function of a measured operating parameter of said engine, and/or that the method further comprises coating at least a portion of said igniter with a combustion catalyst and/or at least a portion of said sleeve with a combustion catalyst.

29. The method according to any one of claims 19 to 28, **characterized in that** said intake opening is one of a plurality of intake openings, preferably wherein each one of said plurality of intake openings is equidistant from said impingement point, and/or that said discharge opening is one of a plurality of discharge openings, preferably wherein the size of said discharge openings is determined by the collective open area needed to accommodate the desired flow through said discharge openings when said engine is operating at full load.

30. The method according to any one of claims 19 to 29, **characterized in that** at least a portion of said igniter comprises a ceramic surface, and/or that the method further comprises aligning said fuel injection valve with the central axis of said combustion chamber.

31. The method according to any one of claims 19 to 30, **characterized in that** the method further comprises directing a portion of the exhaust gas exhausted from said engine into an air intake system, preferably wherein the method further comprises controlling the amount of said portion of the exhaust gas that is directed into said air intake system depending upon measured operating conditions.

32. The method according to claim 31, **characterized in that** further comprises cooling said portion of the exhaust gas that is directed into said air intake system depending upon measured operating conditions, and preferably controlling the amount of said portion of the exhaust gas depending upon measured operating conditions.

33. The method according to any one of claims 19 to 32, **characterized in that** said fuel spray that is directed towards said impingement point travels a distance of between 3 millimeters and 8 millimeters from said fuel injection valve to said impingement point, and/or that the method further comprises operating said engine without throttling the intake air and with a lambda between 1.4 and 6.

## Patentansprüche

1. Brennkraftmaschine, die mit einem brennbaren gasförmigen Kraftstoff angetrieben wird, wobei die Maschine aufweist:
mindestens einen Verbrennungsraum, der durch einen Zylinder, einen sich im Zylinder hin- und herbewegenden Kolben und einen Zylinderkopf als Abdeckung an einem Ende des Zylinders definiert ist;
eine Zündvorrichtung, deren eines Ende im Verbrennungsraum angeordnet ist und die einen Zünder enthält, der ein beheizbares Element zur Schaffung einer heißen Oberfläche und eine den Zünder umgebende Hülse hat, wobei die Hülse einen abgeschirmten Raum zwischen dem Zünder und der Hülse definiert und sich das heizbare Element von einer Halterung im Zylinderkopf in den abgeschirmten Raum erstreckt;
ein Kraftstoffeinspritzventil im Verbrennungsraum, das so betätigt werden kann, dass brennbarer gasförmiger Kraftstoff mittels einer Vielzahl von Kraftstoffstrahlen in den Verbrennungsraum befördert wird, wobei jeder der Kraftstoffstrahlen von jeweils einer aus einer Vielzahl von Kraftstoffeinspritzöffnungen freigegeben wird, von denen mindestens eine so ausgerichtet ist, dass ein Kraftstoffstrahl, der als Zündstrahl bezeichnet wird, auf einen Aufprallpunkt auf einer Oberfläche der Hülse trifft;
mindestens eine Einlassöffnung in der Hülse in der Nähe des Aufprallpunktes, wobei die Öffnung eine Verbindung zwischen dem abgeschirmten Raum und dem Verbrennungsraum herstellt und bewirkt, dass beim Auftreffen des Zündstrahles auf dem Aufprallpunkt ein Teil des brennbaren gasförmigen Kraftstoffs, den der Zündstrahl enthält, durch die Einlassöffnung in den abgeschirmten Raum gelangt; und
mindestens eine Auslassöffhung in der Hülse, wobei die Auslassöffnung so ausgerichtet ist, dass ein brennendes Kraftstoff-Luft-Gemisch aus dem abgeschirmten Raum in Richtung der Vielzahl von Kraftstoffstrahlen in der Nähe des Kraftstoffeinspritzventils abgegeben wird; wobei die Hülse die Strömung zwischen dem abgeschirmten Raum und dem Verbrennungsraum so begrenzt, dass die Verbrennung des brennbaren gasförmigen Kraftstoffs im abgeschirmten Raum in diesem einen Druck erzeugt, der höher als der Druck im Verbrennungsraum und auch hoch genug ist, das brennende Kraftstoff-Luft-Gemisch in den Verbrennungsraum zu befördern und dort in Kontakt mit der Vielzahl von Kraftstoffstrahlen zu bringen;
**dadurch gekennzeichnet,**
**dass** das heizbare Element eine Spitze besitzt, die sich innerhalb von 3 mm zur Mittellinie der Einlassöffuung befindet.

2. Brennkrafhnaschine nach Anspruch 1, **dadurch gekennzeichnet, dass** das heizbare Element eine Spitze besitzt, die sich innerhalb von 1 mm zur Mittellinie der Einlassöffnung befindet, oder dass das heizbare Element über eine Spitze verfügt, die auf gleicher Höhe mit der Mittellinie der Einlassöffnung angeordnet ist.

3. Brennkraftmaschine nach Anspruch 1, **dadurch gekennzeichnet, dass** die Vielzahl von Kraftstoffeinspritzöffnungen so ausgerichtet ist, dass, wenn der Kraftstoffstrahl die entsprechende Kraftstoffeinspritzöffnung verlässt, ein wesentlicher Teil des Kraftstoff-zündstrahls in eine Richtung sprüht, die um weniger als oder gleich 25 Grad von einer Achse abweicht, welche senkrecht auf einer Ebene steht, die am Aufprallpunkt tangential zur Hülse liegt, wobei vorzugsweise eine jede der Kraftstoffeinspritzöffnungen so ausgerichtet ist, dass die Vielzahl von Kraftstoffstrahlen unter einem ersten Einspritzwinkel in den Verbrennungsraum gespritzt werden, der von Zylinderkopf aus gemessen wird; eine Ausnahme davon bildet die Kraftstoffeinspritzöffnung für den Zündstrahl, der unter einem zweiten Einspritzwinkel in den Verbrennungsraum gespritzt wird, welcher sich vom ersten Einspritzwinkel unterscheidet und in Bezug auf die Kraftstoffeinspritzöffnung durch die Ausrichtung der am Aufprallpunkt tangential zur Hülse liegenden Ebene festgelegt ist; der erste Einspritzwinkel wird durch das gewünschte Verteilungsmuster für das Einleiten des gasförmigen Kraftstoffes in den Verbrennungsraum festgelegt.

4. Brennkraftmaschine nach einem der vorhergehenden Ansprüche, **dadurch gekennzeichnet, dass** die Vielzahl von Kraftstoffeinspritzöffnungen so ausgerichtet ist, dass, wenn der Kraftstoffstrahl die entsprechende Kraftstoffeinspritzöffnung verlässt, ein wesentlicher Teil des Kraftstoffstrahls in eine Richtung sprüht, die senkrecht auf einer Ebene steht, welche am Aufprallpunkt tangential zur Hülse liegt, und/oder dass die Vielzahl von Kraftstoffeinspritzöffnungen so ausgerichtet ist, dass, wenn der Kraftstoffstrahl die entsprechende Kraftstoffeinspritzöffnung verlässt, die Mittelachse des Zündstrahls im Wesentlichen senkrecht auf einer Ebene steht, die am Aufprallpunkt tangential zur Hülse liegt.

5. Brennkraftmaschine nach einem der vorhergehenden Ansprüche, **dadurch gekennzeichnet, dass** die Längsachse des Kraftstoffeinspritzventils parallel zu einer Längsachse des Zylinders liegt und dass das Ende der im Verbrennungsraum angeordneten Zündvorrichtung in einem Winkel zum Kraftstoffeinspritzventil steht, wobei die Längsachse der Zündvorrichtung in einem spitzen Winkel zur Längsachse des Kraftstoffeinspritzventil steht, und/oder dass sich die Einlassöffnung in einer Seitenfläche der Hülse und die Auslassöffnung in einer dorriförmigen Endfläche der Hülse befinden und/oder dass die Hülse ein geschlossenes Ende hat und der Medienaustausch zwischen dem Verbrennungsraum und dem abgeschirmten Raum ausschließlich über die Einlassöffnung und die Auslassöffnung erfolgen kann.

6. Brennkraftmaschine nach einem der vorhergehenden Ansprüche, **dadurch gekennzeichnet, dass** mindestens einer aus der Vielzahl von Kraftstoffstrahlen durch eine der Vielzahl von Kxaftstoffeinspritzöffnungen in den Verbrennungsraum gespritzt wird, wobei die Öffnung so ausgerichtet ist, dass mindestens ein Kraftstoffstrahl unter einem Winkel eingespritzt wird, der vom Zylinderkopf aus gemessen wird und sich von dem Winkel des Zündstrahls unterscheidet, wobei die Vielzahl von Kraftstoffstrahlen vorzugsweise unter einem Winkel zwischen 10 und 25 Grad - gemessen vom Zylinderkopf - eingespritzt wird und/oder wobei mindestens einer der Vielzahl von Kraftstoffstrahlen einen Winkel aufweist, der kleiner ist als der des Zündstrahls.

7. Brennkraftmaschine nach einem der vorhergehenden Ansprüche, **dadurch gekennzeichnet, dass** die Maschine bei einem Verdichtungsverhältnis von bis zu 25:1 - vorzugsweise zwischen 13:1 und 25:1 - betrieben werden kann und/oder die Maschine bei einem variable Verdichtungsverhältnis betrieben werden kann.

8. Brennkraftmaschine nach einem der vorhergehenden Ansprüche, **dadurch gekennzeichnet, dass** die Einlassöffnung eine aus einer Vielzahl von Einlassöffnungen in der Hülse ist und dass sich jede Einlassöffnung in der Nähe des Aufprallpunktes befindet, so dass ein Teil des im Zündstrahl enthaltenen brennbaren gasförmigen Kraftstoffs durch die Vielzahl von Einlassöffnungen in den abgeschirmten Raum gelangt, vorzugsweise wenn zwei Einlassöffnungen vorhanden sind.

9. Brennkraftmaschine nach einem der vorhergehenden Ansprüche, **dadurch gekennzeichnet, dass** sich der Aufprallpunkt im gleichen Abstand vom Mittelpunkt jeder der zwei Einlassöffnungen befindet und/oder dass die Mittelpunkte der beiden Einlassöffnungen voneinander etwa 3 mm entfernt sind und/oder dass der Aufprallpunkt der Mittelpunkt einer Geraden ist, die die Mittelpunkte der beiden Einlassöffnungen verbindet, und/oder dass die beiden Einlassöffnungen den gleichen Abstand zum Ende der Zündvorrichtung haben.

10. Brennkraftmaschine nach Anspruch 8 oder 9, **dadurch gekennzeichnet, dass** die Auslassöffnung eine von zwei Anslassöffnungen in der Hülse ist, wobei vorzugsweise jede der Einlassöffnungen und Anslassöffnungen rund ist und einen Durchmesser von nicht weniger als 0,5 mm und nicht mehr als 1,2 mm hat.

11. Brennkraftmaschine nach einem der vorhergehenden Ansprüche, **dadurch gekennzeichnet, dass** die Auslassöffnung eine aus einer Vielzahl von Auslassöffnungen in der Hülse ist, wobei vorzugsweise die Größe jeder der Vielzahl von Auslassöffnungen durch die Gesamtöffnungsfläche bestimmt wird, die erforderlich ist, um bei Volllastbedingungen einen gewünschten Durchlass durch die Vielzahl von Auslassöffnungen zu ermöglichen, und wobei außerdem vorzugsweise die Gesamtäffnungsfläche der Einlass- und Aüslassöffnungen zwischen 0,75 und 5,0 mm² liegt.

12. Brennkraftmaschine nach einem der vorhergehenden Ansprüche, **dadurch gekennzeichnet, dass** der Zünder elektrisch beheizt wird, wobei der Zünder vorzugsweise eine Glühkerze ist, und/oder dass zumindest ein Teil des Zünders eine Keramikoberfläche hat und/oder zumindest ein Teil des Zünders einen katalytischen Überzug besitzt.

13. Brennkraftmaschine nach einem der vorhergehenden Ansprüche, **dadurch gekennzeichnet, dass** mindestens ein Teil der Hülse aus einem keramischen Material besteht und/oder dass die Hülse einen katalytischen Überzug besitzt, der die Reaktionen zwischen dem brennbaren gasförmigen Kraftstoff und der Luft beschleunigt, und dass durch die Hülse Reaktionsprodukte in den abgeschirmten Raum strömen können, welche eine Zündung bei einer niedrigeren Oberflächentemperatur unterstützen,

14. Brennkraftmaschine nach einem der vorhergehenden Ansprüche, **dadurch gekennzeichnet, dass** der Kolben weiterhin über eine Aussparung verfügt, die die Geometrie des Verbrennungsraumes definiert, wobei das Kraftstoffeinspritzventil vorzugsweise im Zylinderkopf eingebaut und in der Mitte der Aussparung angeordnet ist und wobei ebenfalls vorzugsweise der Abstand zwischen dem Aufprallpunkt und der Kraftstoffeinspritzöffnung für den Zündstrahl zwischen 5 % und 10 % des Aussparungsdurchmessers beträgt.

15. Brennkraftmaschine nach einem der vorhergehenden Ansprüche, **dadurch gekennzeichnet, dass** das Kraftstoffeinspritzventil im Zylinderkopf eingebaut ist, wobei der Abstand zwischen dem Aufprallpunkt und der Kraftstoffeinspritzöffnung für den Zündstrahl vorzugsweise zwischen 3 mm und 8 mm liegt und/oder das Kraftstoffeinspritzventil so betätigt werden kann, dass eine Vielzahl von individuellen Einspritzungen während eines einzelnen Verbrennungszyklus möglich ist.

16. Brennkraftmaschine nach einem der vorhergehenden Ansprüche, **dadurch gekennzeichnet, dass** die Größe jeder der Kraftstoffeinspritzöffnungen durch die Gesamtöffnungsfläche bestimmt wird, die erforderlich ist, um bei Volllastbedingungen einen gewünschten Durchlass durch die Krattstoffeinspritzöffnungen zu ermöglichen, und/oder dass das Kraftstoffeinspritzventil so betätigt werden kann, dass der Mengendurchfluss während eines Einspritzvorganges zwischen null und einem Maximum verändert wird, wobei der Durchfluss durch das Kraftstoffeinspritzventil vorzugsweise durch Steuerung der Bewegung einer Nadel innerhalb des Kraftstoffeinspritzventils regelbar ist.

17. Brennkraftmaschine nach einem der vorhergehenden Ansprüche, **dadurch gekennzeichnet, dass** die Brennkraftmaschine ein Abgasrückrührungssystem enthält, welches einen Teil des aus dem Verbrennungsraum austretenden Abgases in ein Luftansaugsystem leitet, wobei dieser Teil des Abgases vorzugsweise vor der Einleitung in das Luftansaugsystem in Abhängigkeit von gemessenen Betriebszuständen der Maschine abgekühlt wird, und/oder dass das Kraftstoffeinspritzventil zwischen vier und zwölf Kraftstoffeinspritzöffnungen hat.

18. Brennkraftmaschine nach einem der vorhergehenden Ansprüche, **dadurch gekennzeichnet, dass** das Kraftstoffeinspritzventil elektromagnetisch geschaltet und hydraulisch angetrieben wird oder über ein Hydraulikventil mit piezoelektrischem Betätigungselement hydraulisch angetrieben wird oder elektronisch geregelt und von einem elektromagnetischen Betätigungselement direkt angetrieben wird oder elektronisch geregelt und von einem piezoelektrischen oder magnetostriktiven Betätigungselement angetrieben wird.

19. Verfahren zum Betreiben einer Brennkraftmaschine für gasförmigen Kraftstoff, die über mindestens einen Verbrennungsraum verfügt, der durch einen Zylinder, einen sich darin hin- und herbewegenden Kolben und einen ein Ende des Zylinders abschließenden Zylinderkopf definiert ist, wobei das Verfahren aufweist:
Einleiten eines gasförmigen Kraftstoffs in den Verbrennungsraum über eine Vielzahl von Kraftstoffstrahlen, die durch ein Kraftstoffeinspritzventil innerhalb des Verbrennungsraumes abgegeben werden;
Richten eines der Kraftstoffstrahlen, der als Zündstrahl bezeichnet wird, auf einen Aufprallpunkt auf der Oberfläche einer Hülse, die einen Zünder dergestalt umhüllt, dass, wenn der Zündstrahl aus der entsprechenden Kraftstoffeinspritzöffnung austritt, ein großer Teil des gasförmigen Kraftstoffs in Richtung des Aufprallpunktes strömt, wobei ein kleiner Teil des gasförmigen Kraftstoffes im Zündstrahl durch eine Einlassöffnung in der Hülse strömt und sich in einem abgeschirmten Raum, der sich zwischen einer heißen Oberfläche eines heizbaren Elementes des Zünders und der Hülse befindet, so mit Luft vermischt, dass sich im Umfeld des Zünders ein brennbares Kraftstoff-Luft-Gemisch bildet, wobei das heizbare Element eine Spitze aufweist, die in einem Abstand von max. 3 mm zur Mittellinie der Einlasstiffnung angeordnet ist;
Entzünden des brennbaren Kraftstoff-Luft-Gemisches durch Erhitzen der Oberfläche des Zünders bis auf eine Temperatur, bei der sich das brennbare Kraftstoff-Luft-Gemisch entzündet; und
Begrenzen des Gasstroms zwischen dem Verbrennungsraum und dem abgeschirmten Raum und Zurückhalten eines wesentlichen Teils des brennbaren Kraftstoff-Luft-Gemisches innerhalb des abgeschirmten Raumes, bis die Verbrennung des Gemisches den Druck im abgeschirmten Raum so weit erhöht hat, dass ein brennendes Kraftstoff-Luft-Gemisch aus dem abgeschirmten Raum durch mindestens eine Auslassöffuung gedrückt wird und in einem Bereich um das Kraftstoffeinspritzventil herum in Kontakt mit der Vielzahl von Kraftstoffstrahlen kommt.

20. Verfahren nach Anspruch 19, **dadurch gekennzeichnet, dass** der Zündstrahl in eine Richtung gespritzt wird, die einen Winkel von weniger als oder gleich 25 Grad zu einer Achse hat, welche senkrecht auf einer Ebene steht, die am Aufprallpunkt tangential zur Oberfläche liegt, vorzugsweise wo die Richtung des Kraftstoffstrahls im Wesentlichen senkrecht zu der Ebene liegt, die am Aufprallpunkt tangential zur Oberfläche der Hülse steht.

21. Verfahren nach Anspruch 19 oder 20, **dadurch gekennzeichnet, dass** die Auslassöffnung einen Abstand zum Aufprallpunkt hat, der größer ist als der Abstand zwischen der Einlassöffnung und dem Aufprallpunkt, wobei der Abstand zwischen der Auslassöffnung und dem Aufprallpunkt vorzugsweise so groß sein soll, dass der auf den Aufprallpunkt gerichtete Kraftstoffstrahl keine Störung hervorrufen kann, die verhindern würde, dass das brennende brennbare Kraftstoff-Luft-Gemisch im Bereich um das Kraftstoffeinspritzventil herum in Kontakt mit der Vielzahl von Kraftstoffstrahlen kommt.

22. Verfahren nach einem der Ansprüche 19 bis 21, **dadurch gekennzeichnet, dass** gasförmiger Kraftstoff mit einem ersten Mengendurchsatz in den Verbrennungsraum eingeleitet wird, wenn die Maschine bei geringer Last oder im Leerlauf betrieben wird, und dass gasförmiger Kraftstoff mit einem zweiten Mengendurchsatz in den Verbrennungsraum eingeleitet wird, wenn die Maschine bei hoher Belastung betrieben wird, wobei der zweite Mengendurchsatz höher als der erste Mengendurchsatz ist; die bevorzugte Methode umfasst weiterhin die Regelung des Mengendurchsatzes, wodurch eine gewünschte Menge des gasförmigen Kraftstoffes in den Verbrennungsraum eingeleitet wird, so dass ein Einspritzvorgang länger dauert als eine Zündverzögerung bei der Zündung des gasförmigen Kraftstoffes, der zu Beginn des Einspritzvorganges auf die Zündvorrichtung gerichtet war.

23. Verfahren nach einem der Ansprüche 19 bis 22, **dadurch gekennzeichnet, dass** außerdem der Einspritzvorgang und die Dauer des Einspritzvorganges als Funktion der gemessenen Betriebszustände der Maschine und durch Bezugnahme auf ein elektronisches Maschinendiagramm zeitlich gesteuert wird; die bevorzugte Methode umfasst weiterhin die Steuerung des Kraftstoffeinspritzventils, wodurch der Durchsatz von gasförmigem Kraftstoff während eines Einspritzvorganges geregelt wird, wobei das Verfahren aufweist:
Bezugnehmen auf ein elektronisches Maschinendiagramm und Bestimmen einer Gesamtmenge an gasförmigem Kraftstoff, die während eines Einspritzvorganges für eine erkannte Maschinenlast eingeleitet wird;
Wählen eines ersten Mengendurchsatzes in einer ersten Phase des Einspritzvorganges, durch den sich innerhalb des abgeschirmten Raumes das brennbare Gemisch bilden kann; und
Wählen eines zweiten Mengendurchsatzes in einer zweiten Phase des Einspritzvorganges, der die Menge an gasförmigem Kraftstoff, der in der ersten Phase eingeleitet wurde, erhöht, so dass sich während des Einspritzvorganges die Gesamtmenge an gasförmigem Kraftstoff ergibt.

24. Verfahren nach Anspruch 23, **dadurch gekennzeichnet, dass** die erste Phase mindestens 2 Millisekunden vor der zweiten Phase beginnt und/oder dass die zweite Phase während eines Verdichtungshubs zwischen 34 und 5 Kurbelwinkelgrade vor dem oberen Totpunkt beginnt und/oder dass sich der gasförmige Kraftstoff, der in der zweiten Phase eingeleitet wird, in dieser zweiten Phase entzündet.

25. Verfahren nach einem der Ansprüche 19 bis 24, **dadurch gekennzeichnet, dass** der gasförmige Kraftstoff während eines einzelnen Maschinenzyklus in einer Vielzahl von Einspritzvorgängen in den Verbrennungsraum eingeleitet wird, wobei vorzugsweise ein erster Einspritzvorgang zur Einleitung einer ersten Menge an gasförmigem Kraftstoff in den Verbrennungsraum erfolgt, der dann von der Zündvorrichtung entzündet wird, und danach mindestens ein weiterer Einspritzvorgang erfolgt, bei dem eine zweite Menge an gasförmigem Kraftstoff eingeleitet wird, wobei die erste und die zweite Menge Kraftstoff zusammen die Gesamtmenge an Kraftstoff ausmachen, die gleich einer Menge ist, welche ein Maschinen-Steuergerät, das sich an einem Maschinendiagramm orientiert, ermittelt hat; als erste Kraftstoffmenge wird vom Maschinen-Steuergerät eine Menge bestimmt, die ausreichend ist und sicherstellt, dass die zweite Kraftstoffmenge entzündet wird.

26. Verfahren nach Anspruch 25, **dadurch gekennzeichnet, dass** die erste Menge an gasförmigem Kraftstoff nicht mehr als 10 Masseprozente der Gesamtmenge des Kraftstoffes ausmacht, wenn die Maschine bei Volllast betrieben wird, und/oder dass die erste Menge an gasförmigem Kraftstoff zwischen 5 und 10 Masseprozent der Gesamtmenge des Kraftstoffes ausmacht, wenn die Maschine bei Volllast betrieben wird, und/oder dass der zweite Einspritzvorgang bei einem Verdichtungshub zwischen ca. 34 und 5 Kurbelwinkelgrade vor dem oberen Totpunkt beginnt und/oder dass die zweite Menge an gasförmigem Kraftstoff auf eine Vielzahl von Kraftstoffeinspritzvorgängen aufgeteilt wird.

27. Verfahren nach Anspruch 26, **dadurch gekennzeichnet, dass** der erste Einspritzvorgang mindestens 0,2 Millisekunden dauert, wobei der erste Einspritzvorgang vorzugsweise weniger als oder gleich 0,5 Millisekunden dauert, und/oder dass der zweite Einspritzvorgang weniger als oder gleich 1 Millisekunde nach dem Ende des ersten Einspritzvorganges beginnt, wobei der zweite Einspritzvorgang vorzugsweise mehr als 0,2 Millisekunden nach dem Ende des ersten Einspritzvorganges beginnt.

28. Verfahren nach einem der Ansprüche 19 bis 27, **dadurch gekennzeichnet, dass** sie außerdem eine elektrische Heizung des Zünders einschließt, um eine Oberflächentemperatur zu erhalten, die hoch genug ist, um das brennbare Kraftstoff-Luft-Gemisch zu entzünden, wobei vorzugsweise die Temperatur des Zünders als Funktion eines gemessenen Maschinen-Betriebsparameters geregelt wird und/oder die Methode weiterhin die Beschichtung zumindest eines Teils des Zünders mit einem Verbrennungskatalysator und/oder die Beschichtung zumindest eines Teils der Hülse mit einem Verbrennungskatalysator umfasst.

29. Verfahren nach einem der Ansprüche 19 bis 28, **dadurch gekennzeichnet, dass** die Einlassöffnung eine aus einer Vielzahl von Einlassöffnungen ist, wobei vorzugsweise alle Einlassöffnungen den gleichen Abstand vom Aufprallpunkt haben, und/oder dass die Auslassöffnung eine aus einer Vielzahl von Auslassöffnungen ist, wobei die Größe der Aüslassöffnungen vorzugsweise durch die gesamte Öffnungsfläche bestimmt wird, die notwendig ist, um den für eine mit Volllast arbeitende Maschine gewünschten Durchsatz durch die Auslassöffnungen zu erreichen.

30. Verfahren nach einem der Ansprüche 19 bis 29, **dadurch gekennzeichnet, dass** zumindest ein Teil des Zünders eine keramische Oberfläche hat, und/oder dass die Methode außerdem beinhaltet, das Kraftstoffeinspritzventil auf die Mittelachse des Verbrennungsraumes auszurichten.

31. Verfahren nach einem der Ansprüche 19 bis 30, **dadurch gekennzeichnet, dass** ein Teil des Abgases aus der Maschine in ein Luftansaugsystem geleitet wird, wobei dieser Teil des Abgases, der in das Luftansaugsystem geleitet wird, vorzugsweise in Abhängigkeit von gemessenen Betriebsbedingungen geregelt wird.

32. Verfahren nach Anspruch 31, **dadurch gekennzeichnet, dass** der in das Luftansaugsystem geleitete Teil des Abgases in Abhängigkeit von gemessenen Betriebsbedingungen gekühlt und dass die Menge dieses Teils des Abgases vorzugsweise in Abhängigkeit von gemessenen Betriebsbedingungen geregelt wird.

33. Verfahren nach einem der Ansprüche 19 bis 32, **dadurch gekennzeichnet, dass** die Strecke, die der auf den Aufprallpunkt gerichtete Kraftstoffstrahl vom Kraftstoffeinspritzventil zum Aufprallpunkt zurücklegt, zwischen 3 mm und 8 mm beträgt, und/oder dass die Maschine ohne Drosselung der Ansaugluft und bei einem Lambda zwischen 1,4 und 6 betrieben wird,

## Revendications

1. Moteur à combustion interne alimenté en carburant avec un carburant gazeux combustible, ledit moteur comprenant :
au moins une chambre de combustion définie par un cylindre, par un piston apte à effectuer un mouvement alternatif à l'intérieur dudit cylindre, et par une culasse qui recouvre une extrémité dudit cylindre ;
un dispositif d'allumage possédant une extrémité disposée à l'intérieur de ladite chambre de combustion, ledit dispositif d'allumage comprenant un allumeur qui comprend un membre qui peut être chauffé pour procurer une surface chaude et un manchon entourant ledit allumeur, ledit manchon définissant un espace protégé entre ledit allumeur et ledit manchon, ledit membre apte à être chauffé s'étendant jusque dans ledit espace protégé à partir d'un support monté dans ladite culasse ;
un injecteur de carburant disposé au sein de ladite chambre de combustion, ledit injecteur de carburant pouvant être actionné pour introduire ledit carburant gazeux combustible dans ladite chambre de combustion avec plusieurs jets de carburant, chacun jaillissant à partir d'un orifice d'injection de carburant parmi plusieurs orifices de ce type, au moins un desdits plusieurs orifices d'injection de carburant étant orienté pour diriger un jet de carburant, que l'on désigne par l'expression «jet de carburant d'allumage » en direction d'un endroit de mise en contact sur une surface dudit manchon ;
au moins une ouverture d'admission pratiquée à travers ledit manchon à proximité dudit endroit de mise en contact, reliant ledit espace protégé à ladite chambre de combustion, par laquelle, lorsque ledit jet de carburant d'allumage entre en contact avec ledit endroit de mise en contact, une portion dudit carburant gazeux combustible que contient ledit jet de carburant d'allumage passe à travers ladite ouverture d'admission et pénètre dans ledit espace protégé; et
au moins une ouverture d'évacuation pratiquée à travers ledit manchon, ladite ouverture d'évacuation étant orientée pour diriger un mélange air-carburant en train de brûler, à partir dudit espace protégé et en direction desdits plusieurs jets de carburant à proximité dudit injecteur de carburant ;
ledit manchon restreignant l'écoulement entre ledit espace protégé et ladite chambre de combustion de telle sorte que la combustion dudit carburant gazeux combustible au sein dudit espace protégé génère une pression qui est supérieure à la pression régnant dans la chambre de combustion, ladite pression étant suffisamment élevée pour propulser ledit mélange air-carburant en train de brûler dans ladite chambre de combustion et en contact avec lesdits plusieurs jets de carburant ;
**caractérisé**
**en ce que** ledit membre apte à être chauffé possède une extrémité disposée à une distance de 3 mm en deçà de la ligne médiane de ladite ouverture d'admission.

2. Moteur à combustion interne selon la revendication 1, **caractérisé en ce que** ledit membre apte à être chauffé possède une extrémité disposée à une distance de 1 mm en deçà de la ligne médiane de ladite ouverture d'admission, ou bien ledit membre apte à être chauffé possède une extrémité disposée à l'endroit où elle se trouve à niveau avec la ligne médiane de ladite ouverture d'admission.

3. Moteur à combustion interne selon la revendication 1, **caractérisé en ce que** lesdits plusieurs orifices d'injection de carburant sont orientés de telle sorte que, lorsque ledit jet de carburant d'allumage quitte son orifice d'injection de carburant respectif, une portion substantielle dudit jet de carburant d'allumage s'écoule dans une direction de projection qui est orientée en formant un angle inférieur ou égal à 25° par rapport à un axe perpendiculaire à un plan qui est tangentiel audit manchon audit endroit de mise en contact, de préférence dans lequel chacun desdits plusieurs orifices d'injection de carburant est orienté pour diriger lesdits plusieurs jets de carburant dans ladite chambre de combustion en formant un premier angle d'injection mesuré par rapport à ladite culasse, à l'exception de l'orifice d'injection de carburant associé audit jet de carburant d'allumage qui est orienté pour diriger ledit jet de carburant d'allumage dans ladite chambre de combustion en formant un deuxième angle d'injection, différent dudit premier angle d'injection, ledit deuxième angle d'injection étant prédéterminé par la mise en alignement dudit plan qui est tangentiel audit manchon audit endroit de mise en contact avec ledit orifice d'injection de carburant, et ledit premier angle d'injection étant prédéterminé par la configuration de distribution désirée pour introduire ledit carburant gazeux dans ladite chambre de combustion.

4. Moteur à combustion interne selon l'une quelconque des revendications précédentes, **caractérisé en ce que** lesdits plusieurs orifices d'injection de carburant sont orientés de telle sorte que, lorsque ledit jet de carburant d'allumage quitte son orifice d'injection de carburant respectif, une portion substantielle dudit jet de carburant d'allumage est projetée dans une direction qui est essentiellement perpendiculaire à un plan qui est tangentiel audit manchon audit endroit de mise en contact, et/ou **en ce que** lesdits plusieurs orifices d'injection de carburant sont orientés de telle sorte que, lorsque ledit jet de carburant d'allumage quitte son orifice d'injection de carburant respectif, ledit jet de carburant d'allumage possède un axe central qui est essentiellement perpendiculaire à un plan qui est tangentiel audit manchon audit endroit de mise en contact.

5. Moteur à combustion interne selon l'une quelconque des revendications précédentes, **caractérisé en ce que** ledit injecteur de carburant possède un axe longitudinal qui est parallèle à l'axe longitudinal dudit cylindre, ladite extrémité dudit dispositif d'allumage disposée au sein de ladite chambre de combustion formant un angle orienté en direction dudit injecteur de carburant, si bien que ledit dispositif d'allumage possède un axe longitudinal qui forme un angle aigu par rapport audit axe longitudinal dudit injecteur de carburant, et/ou **en ce que** ladite ouverture d'admission est pratiquée à travers une surface latérale dudit manchon et ladite ouverture d'évacuation est pratiquée à travers une surface terminale dudit manchon, en forme de dôme, et/ou **en ce que** ledit manchon possède une extrémité fermée, ladite ouverture d'admission et ladite ouverture d'évacuation représentant les seuls moyens pour établir des communications par fluide entre ladite chambre de combustion et ledit espace protégé.

6. Moteur à combustion interne selon l'une quelconque des revendications précédentes, **caractérisé en ce qu'**au moins un desdits jets de carburant est introduit dans ladite chambre de combustion à travers un desdits plusieurs orifices d'injection de carburant qui est orienté pour diriger ledit au moins un jet de carburant à un angle d'injection, mesuré par rapport à ladite culasse, qui est différent de celui formé par ledit jet de carburant d'allumage, de préférence dans lequel lesdits plusieurs jets de carburant forment chacun un angle d'injection qui s'élève entre 10 et 25°, mesuré par rapport à ladite culasse ; et/ou dans lequel ledit au moins un desdits plusieurs jets de carburant forme un angle d'injection qui est inférieur à celui formé par ledit jet de carburant d'allumage.

7. Moteur à combustion interne selon l'une quelconque des revendications précédentes, **caractérisé en ce que** ledit moteur peut être actionné avec un rapport de compression s'élevant jusqu'à 25 : 1 ; de préférence entre 13 : 1 et 25 : 1, et/ou **en ce que** ledit moteur peut être actionné avec un rapport de compression variable.

8. Moteur à combustion interne selon l'une quelconque des revendications précédentes, dans lequel ladite ouverture d'admission représente une desdites plusieurs ouvertures d'admission prévues à travers ledit manchon, chaque ouverture d'admission étant disposée à proximité dudit endroit de mise en contact, si bien qu'une portion dudit carburant gazeux combustible contenu dans ledit jet de carburant d'allumage pénètre dans ledit espace protégé à travers lesdites plusieurs ouvertures d'admission, de préférence dans lequel on prévoit deux ouvertures d'admission.

9. Moteur à combustion interne selon l'une quelconque des revendications précédentes, **caractérisé en ce que** ledit endroit de mise en contact est équidistant par rapport au centre de chacune desdites ouverture d'admission, et/ou **en ce que** les centres desdites deux ouvertures d'admission sont espacés les uns des autres sur une distance d'environ 3 mm, et/ou **en ce que** ledit endroit de mise en contact représente le milieu d'une ligne droite tracée entre les centres de chacune desdites deux ouvertures d'admission, et/ou **en ce que** lesdites deux ouvertures d'admission sont disposées à la même distance par rapport à ladite extrémité dudit dispositif d'allumage.

10. Moteur à combustion interne selon la revendication 8 ou 9, **caractérisé en ce que** l'ouverture d'évacuation représente une des deux ouvertures d'évacuation prévues à travers ledit manchon, de préférence dans lequel chacune desdites ouvertures d'admission et desdites ouvertures d'évacuation est ronde et possède un diamètre qui n'est pas inférieur à 0,5 mm et qui n'est pas supérieur à 1,2 mm.

11. Moteur à combustion interne selon l'une quelconque des revendications précédentes, **caractérisé en ce que** ladite ouverture d'évacuation représente une desdites plusieurs ouvertures d'évacuation prévues à travers ledit manchon, de préférence dans lequel la dimension de chacune desdites plusieurs ouvertures d'évacuation est déterminée par les espaces libres combinés requis pour permettre un écoulement désiré à travers lesdites plusieurs ouvertures d'évacuation dans des conditions de travail à pleine charge, de manière plus préférée, dans lequel les espaces libres combinés desdites ouvertures d'admission et d'évacuation se situent entre environ 0,75 et 5,0 mm².

12. Moteur à combustion interne selon l'une quelconque des revendications précédentes, **caractérisé en ce que** ledit allumeur est chauffé de manière électrique, de préférence dans lequel ledit allumeur est une bougie de préchauffage et/ou dans lequel au moins une portion dudit allumeur possède une surface en céramique et/ou dans lequel au moins une portion dudit allumeur est muni d'une couche catalytique.

13. Moteur à combustion interne selon l'une quelconque des revendications précédentes, **caractérisé en ce que** au moins une portion dudit manchon est réalisée en une matière céramique et/ou **en ce que** ledit manchon est recouvert d'une couche catalytique pour favoriser des réactions impliquant ledit carburant gazeux combustible et ledit air dans le but d'introduire les produits réactionnels dans ledit espace protégé, qui favorisent l'allumage à une température superficielle inférieure.

14. Moteur à combustion interne selon l'une quelconque des revendications précédentes, **caractérisé en ce que** ledit piston comprend en outre un évidement qui définit en outre la géométrie de ladite chambre de combustion, de préférence dans lequel ledit injecteur de carburant est monté dans ladite culasse et est mis en alignement avec le centre dudit évidemment, de manière plus préférée, dans lequel la distance entre ledit endroit de mise en contact et ledit orifice d'injection de carburant associé audit jet de carburant d'allumage représente entre 5 % et 10 % du diamètre dudit évidemment.

15. Moteur à combustion interne selon l'une quelconque des revendications précédentes, **caractérisé en ce que** ledit injecteur de carburant est monté dans ladite culasse, de préférence dans lequel la distance entre ledit endroit de mise en contact et ledit orifice d'injection de carburant associé audit jet de carburant d'allumage s'élève entre 3 mm et 8 mm, et/ou **en ce que** ledit injecteur de carburant peut être actionné pour procurer plusieurs événements d'injection individuels au cours d'un seul cycle de combustion.

16. Moteur à combustion interne selon l'une quelconque des revendications précédentes, **caractérisé en ce que** la dimension de chacun desdits orifices d'injection de carburant est déterminée par les espaces libres collectifs requis pour permettre un écoulement désiré à travers lesdits orifices d'injection dans des conditions de travail à pleine charge, et/ou **en ce que** ledit injecteur de carburant peut être actionné pour moduler le débit massique entre un débit massique nul et un débit massique maximal au cours d'un événement d'injection, de préférence dans lequel le débit massique à travers ledit injecteur de carburant peut être contrôlé en contrôlant le mouvement d'un pointeau au sein dudit injecteur de carburant.

17. Moteur à combustion interne selon l'une quelconque des revendications précédentes, **caractérisé en ce que** le moteur à combustion interne comprend un système de recirculation des gaz d'échappement pour diriger, dans un système d'admission d'air, une portion des gaz d'échappement échappés de ladite chambre de combustion, de préférence dans lequel ladite portion des gaz d'échappement est refroidie avant d'être dirigée dans ledit système d'admission d'air, en fonction de conditions de fonctionnement du moteur mesurées, et/ou en ce que ledit injecteur de carburant comprend entre quatre et douze orifices d'injection de carburant.

18. Moteur à combustion interne selon l'une quelconque des revendications précédentes, **caractérisé en ce que** ledit injecteur de carburant est commuté entre un entraînement électromagnétique et un entraînement hydraulique, ou bien est soumis à un entraînement hydraulique en utilisant une vanne hydraulique comprenant un actionneur piézo-électrique, ou bien est commandé par voie électronique et entraîné directement par un actionneur électromagnétique, ou bien est commandé par voie électronique et entraîné par un actionneur piézo-électrique ou magnétostrictif.

19. Procédé de fonctionnement d'un moteur à combustion interne alimenté avec un carburant gazeux, comprenant au moins une chambre de combustion définie par un cylindre, par un piston apte à effectuer un mouvement alternatif à l'intérieur dudit cylindre, et par une culasse qui recouvre une extrémité dudit cylindre, ledit procédé comprenant le fait de ;
introduire un carburant gazeux dans ladite chambre de combustion au moyen de plusieurs jets de carburant projetés dans ladite chambre de combustion à partir d'un injecteur de carburant disposé au sein de ladite chambre de combustion ;
diriger un desdits jets de carburant, que l'on désigne par l'expression « jet de carburant d'allumage » en direction d'un endroit de mise en contact sur une surface de manchon qui entoure un allumeur, de telle sorte que, lorsque ledit jet d'allumage quitte son orifice d'injection de carburant respectif, une portion substantielle dudit carburant gazeux s'écoule en direction dudit endroit de mise en contact, une certaine quantité dudit carburant gazeux émanant dudit jet de carburant d'allumage s'écoulant à travers une ouverture d'admission pratiquée dans ledit manchon et se mélangeant avec de l'air dans un espace protégé prévu entre une surface chaude d'un membre apte à être chauffé dudit allumeur et ledit manchon pour former un mélange combustible air-carburant à côté dudit allumeur, ledit membre apte à être chauffé possédant une extrémité disposée à une distance de 3 mm en deçà de la ligne médiane de ladite ouverture d'admission ;
enflammer ledit mélange combustible air-carburant en chauffant une surface dudit allumeur à une température qui provoque l'allumage dudit mélange combustible air-carburant ; et
restreindre l'écoulement de fluide entre ladite chambre de combustion et ledit espace protégé et retenir une portion substantielle dudit mélange combustible air-carburant au sein dudit espace protégé jusqu'à ce que la combustion dudit mélange augmente la pression régnant dans ledit espace protégé jusqu'à une valeur qui propulse un mélange air-carburant de combustion à partir dudit espace à travers au moins une ouverture d'évacuation pour entrer en contact avec lesdits plusieurs jets de carburant dans ladite chambre de combustion dans une zone qui entoure ledit injecteur de carburant.

20. Procédé selon la revendication 19, **caractérisé en ce que** ledit jet de carburant d'allumage est orienté dans une direction de projection qui forme un angle inférieur ou égal à 25° par rapport à un axe perpendiculaire à un plan qui est tangentiel audit manchon audit endroit de mise en contact, de préférence dans lequel ladite direction de projection forme un angle essentiellement perpendiculaire au plan qui est tangentiel à ladite surface dudit manchon audit endroit de mise en contact.

21. Procédé selon la revendication 19 ou 20, **caractérisé en ce que** le procédé comprend en outre le fait d'espacer ladite ouverture d'évacuation dudit endroit de mise en contact sur une distance qui est supérieure à la distance s'étendant entre ladite ouverture d'admission et ledit endroit de mise en contact, de préférence dans lequel ladite distance s'étendant entre ladite ouverture d'évacuation et ledit endroit de mise en contact procure un espacement tel qu'une interférence émanant dudit jet de carburant qui est dirigé vers ledit endroit de mise en contact n'empêche pas ledit mélange combustible air-carburant en train de brûler d'être propulse pour entrer en contact avec lesdits plusieurs jets de carburant dans ladite zone qui entoure ledit injecteur de carburant.

22. Procédé selon l'une quelconque des revendications 19 à 21, **caractérisé en ce que** le procédé comprend en outre le fait d'injecter ledit carburant gazeux dans ladite chambre de combustion à un premier débit massique lorsque ledit moteur fonctionne à faible charge ou à vide, et le fait d'injecter ledit carburant gazeux dans ladite chambre de combustion à un deuxième débit massique lorsque ledit moteur fonctionne sous une charge élevée, ledit deuxième débit massique étant supérieur audit premier débit massique, de préférence dans lequel le procédé comprend en outre le fait de contrôler le débit massique pour injecter une quantité désirée dudit carburant gazeux dans ladite chambre de combustion de telle sorte que la durée d'un événement d'injection est supérieure au retard d'allumage associé à l'allumage dudit carburant gazeux qui a été orienté en direction dudit dispositif d'allumage au début dudit événement d'injection.

23. Procédé selon l'une quelconque des revendications 19 à 22, **caractérisé en ce que** le procédé comprend en outre le fait de contrôler le calage de l'injection et la durée de l'événement d'injection en fonction de conditions de fonctionnement du moteur mesurées et en se référant à une cartographie électronique des variables importantes du moteur, de préférence dans lequel le procédé comprend en outre le fait de contrôler ledit injecteur de carburant pour contrôler le débit massique dudit carburant gazeux qui est introduit au cours d'un événement d'injection, ledit procédé comprenant le fait de :
se référer à ladite cartographie électronique des variables importantes du moteur et déterminer une quantité totale dudit carburant gazeux qui sera introduite au cours d'un événement d'injection pour une charge de moteur détectée ;
au cours d'un premier stade dudit événement d'injection, sélectionner un premier débit massique qui va donner lieu à la formation dudit mélange combustible au sein dudit espace protégé ; et
au cours d'un deuxième stade dudit événement d'injection, sélectionner un deuxième débit massique qui va augmenter la quantité de carburant gazeux introduite au cours dudit premier stade afin de procurer ladite quantité totale de carburant gazeux au cours dudit événement d'injection.

24. Procédé selon la revendication 23, **caractérisé en ce que** la durée du premier stade commence au moins 2 millisecondes avant ledit deuxième stade, et/ou **en ce que** ledit deuxième stade commence entre des positions du vilebrequin correspondant à environ 34 et 5 degrés avant le point mort haut au cours d'une course de compression, et/ou **en ce que** ledit carburant gazeux qui est introduit au cours dudit deuxième stade est allumé au cours dudit deuxième stade.

25. Procédé selon l'une quelconque des revendications 19 à 24, **caractérisé en ce que** le procédé comprend en outre le fait d'introduire ledit carburant gazeux dans ladite chambre de combustion en plusieurs événements d'injection au cours d'un seul cycle du moteur, de préférence dans lequel on utilise un premier événement d'injection pour introduire une première quantité dudit carburant gazeux dans ladite chambre de combustion à des fins d'allumage par ledit dispositif d'allumage, suivi par au moins un autre événement d'injection pour introduire une deuxième quantité dudit carburant gazeux, dans lequel lesdites première et deuxième quantités de carburant procurent ensemble une quantité totale de carburant qui est égale à une quantité déterminée par un contrôleur du moteur, par référence à une cartographie électronique des variables importantes du moteur, et ladite première quantité de carburant est déterminée par ledit contrôleur du moteur comme étant une quantité qui est suffisante pour garantir l'allumage de ladite deuxième quantité de carburant.

26. Procédé selon la revendication 25, **caractérisé en ce que** ladite première quantité dudit carburant gazeux ne représente pas plus de 10 % en masse de ladite quantité totale de carburant lorsque ledit moteur est actionné à pleine charge, et/ou **en ce que** ladite première quantité dudit carburant gazeux représente entre 5 % et 10 % en masse de ladite quantité totale de carburant lorsque ledit moteur est actionné à pleine charge, et/ou **en ce que** ledit deuxième événement d'injection commence entre des positions du vilebrequin correspondant à environ 34 et 5 degrés avant le point mort haut au cours d'une course de compression, et/ou en ce que ladite deuxième quantité dudit carburant gazeux est subdivisée entre plusieurs événements d'injection de carburant.

27. Procédé selon la revendication 26, **caractérisé en ce que** ledit premier événement d'injection possède une durée d'au moins 0,2 milliseconde, de préférence dans lequel ledit premier événement d'injection possède une durée inférieure ou égale à 0,5 milliseconde ; et/ou **en ce que** ledit deuxième événement d'injection commence à une durée inférieure ou égale à 1 milliseconde après la fin dudit premier événement d'injection, de préférence dans lequel ledit deuxième événement d'injection commence à une durée supérieure à 0,2 milliseconde après la fin dudit premier événement d'injection.

28. Procédé selon l'une quelconque des revendications 19 à 27, **caractérisé en ce que** le procédé Comprend en outre le fait de chauffer par voie électrique ledit allumeur pour posséder une température superficielle qui est suffisamment chaude pour allumer ledit mélange combustible air-carburant, de préférence dans lequel le procédé comprend en outre le fait de régler la température dudit allumeur en fonction d'un paramètre opératoire mesuré dudit moteur, et/ou **en ce que** le procédé comprend en outre le fait de recouvrir au moins une portion dudit allumeur avec un catalyseur de combustion et/ou au moins une portion dudit manchon avec un catalyseur de combustion.

29. Procédé selon l'une quelconque des revendications 19 à 28, **caractérisé en ce que** ladite ouverture d'admission représente une ouverture parmi plusieurs ouvertures d'admission, de préférence dans lequel chacune desdites plusieurs ouvertures d'admission est équidistante par rapport audit endroit de mise en contact, et/ou **en ce que** ladite ouverture d'évacuation représente une ouverture parmi plusieurs ouvertures d'évacuation, de préférence dans lequel la dimension desdites ouvertures d'évacuation est déterminée par les espaces libres collectifs requis pour prendre en compte l'écoulement désiré à travers lesdites ouvertures d'évacuation lorsque ledit moteur est actionné à pleine charge.

30. Procédé selon l'une quelconque des revendications 19 à 29, **caractérisé en ce que** au moins une portion dudit allumeur comprend une surface en céramique, et/ou en ce que le procédé comprend en outre le fait de mettre en alignement ledit injecteur de carburant avec l'axe central de ladite chambre de combustion.

31. Procédé selon l'une quelconque des revendications 19 à 30, **caractérisé en ce que** le procédé comprend en outre le fait de diriger une portion des gaz d'échappement échappés dudit moteur dans un système d'admission d'air, de préférence dans lequel le procédé comprend en outre le fait de contrôler la quantité de ladite portion des gaz d'échappement qui est dirigée dans ledit système d'admission d'air en fonction de conditions opératoires mesurées.

32. Procédé selon la revendication 31, **caractérisé en ce qu'**il comprend en outre le fait de refroidir ladite portion des gaz d'échappement qui est dirigée dans ledit système d'admission d'air en fonction de conditions opératoires mesurées, et de préférence le fait de contrôler la quantité de ladite portion des gaz d'échappement en fonction de conditions opératoires mesurées -

33. Procédé selon l'une quelconque des revendications 19 à 32, **caractérisé en ce que** ledit jet de carburant qui est dirigé vers ledit endroit de mise en contact parcourt une distance entre 3 mm et 8 mm à partir dudit injecteur de carburant jusqu'audit endroit de mise en contact, et/ou **en ce que** le procédé comprend en outre le fait d'actionner ledit moteur en l'absence d'un étranglement de l'air d'admission et avec une valeur lambda entre 1,4 et 6.
